# EUROPÄISCHE PATENTANMELDUNG

(11) **EP 1 428 730 A2**
(43) Veröffentlichungstag der Anmeldung: **16.06.2004**
(21) Anmeldenummer: 03024746.4
(22) Anmeldetag: 29.10.2003
(51) Int. Cl.: B60R 21/20

(54) **Sicherheitseinrichtung für ein Fahrzeug, insbesondere für ein Kraftfahrzeug**

(30) Priorität: 10.12.2002 DE 10257758
(71) Anmelder: Volkswagen Aktiengesellschaft, 38436 Wolfsburg (DE)
(72) Erfinder: Hagen, Stefan, 38554 Weyhausen (DE); Oehm, Klaus, 38518 Gifhorn (DE); Faisst, Werner, 38118 Braunschweig (DE); Strutz, Torsten, 38442 Wolfsburg (DE)
(74) Vertreter: Liebl, Thomas, Dipl.-Ing.

(57) **Zusammenfassung**

Die Erfindung betrifft eine Sicherheitseinrichtung (1; 1') für ein Fahrzeug, insbesondere für ein Kraftfahrzeug, mit einer in einem Verkleidungsteil (5) ausgebildeten Airbagaustrittöffnung (3), die im nicht aktivierten Grundzustand der Sicherheitseinrichtung (1; 1') mittels einem Deckel (2) verschlossen ist. Im aktivierten Zustand der Sicherheitseinrichtung (1; 1') ist der Deckel (2) durch den sich aufblasenden Airbag (13) zur Freigabe der Airbagaustrittöffnung (3) von dieser abhebbar. Erfindungsgemäß ist der Deckel (2) so am Öffnungsrandbereich der Airbagaustrittöffnung (3) angebunden, dass dieser durch den sich aufblasenden Airbag (13) zuerst mit einem einer Fahrzeuginsassensitzposition abgewandten insassenfernen Deckelende (7) von der Airbagaustrittöffnung (3) abhebbar ist und mit einem der Fahrzeuginsassensitzposition zugewandten insassennahen Deckelendbereich (6), der dem insassenfernen Deckelende (7) gegenüberliegt, weiterhin in einem Deckel-Haltebereich der Airbagaustrittöffnung (3) mittels einer Halteverbindung (19) gehalten ist. Dadurch ist zwischen dem Verkleidungsteil (5) und dem abgehobenen Deckelbereich (7) ein seitlicher und dem Deckel-Haltebereich (46) gegenüberliegender hinterer Airbagaustrittspalt (33) ausgebildet, durch den hindurch ein Airbagteilbereich nicht direkt in Richtung auf die zugeordnete Fahrzeuginsassensitzposition in den Fahrzeuginnenraum hinein entfaltbar ist. Im weiteren Verlauf des Aufblasens des Airbags (13) ist die Halteverbindung (19) zwischen dem insassennahen Deckelendbereich (6) und dem Deckel-Haltebereich der Airbagaustrittöffnung (3) lösbar zum vollständigen Abheben des Deckels (2) von der Airbagaustrittöffnung (3) und damit zur vollständigen Freigabe der Airbagaustrittöffnung (3) für ein Aufblasen des Airbags (13) in Richtung zur zugeordneten Fahrzeuginsassensitzposition hin.

## Beschreibung

Die Erfindung betrifft eine Sicherheitseinrichtung für ein Fahrzeug, insbesondere für ein Kraftfahrzeug, nach dem Oberbegriff des Anspruchs 1.

Aus der gattungsbildenden DE 196 33 109 A1 ist bereits eine Sicherheitseinrichtung für ein Kraftfahrzeug mit einer in einem Verkleidungsteil ausgebildeten Airbagaustrittöffnung bekannt, die im nicht aktivierten Grundzustand der Sicherheitseinrichtung mittels einem Deckel verschlossen ist. Im nicht aktivierten Grundzustand ist im Bereich der Airbagaustrittöffnung auf der im Fahrzeuginnenraum abgewandten Seite des Verkleidungsteiles ein Airbag zusammengefaltet angeordnet, wobei der Deckel im aktivierten Zustand der Sicherheitseinrichtung durch den sich aufblasenden Airbag zur Freigabe der Airbagaustrittöffnung von dieser abhebbar ist.

Konkret ist der Deckel hier mittels einem Fangband gesichert, wobei ein Ende des Fangbandes mit der Abdeckung verbunden ist und das andere Ende in Form einer Schlaufe um ein Verankerungselement herumgelegt ist. Das Verankerungselement für das Fangband ist unabhängig von Komponenten eines den Airbag umfassenden Airbagmoduls lösbar an einem ortsfesten Halteelements des Kraftfahrzeuges festgelegt. Der Deckel selbst ist mit Clipsen an einem abgestuften Rand der Airbagaustrittöffnung angebracht. Die Clipse sind aus einem elastisch verformbaren Kunststoffmaterial oder aus Federstahl hergestellt und werden an vorgegebenen Stellen im Randbereich befestigt. Die Clipse selbst weisen jeweils einen Rastanker auf, der aus zwei fingerartigen, mit seitlich überstehenden Widerhaken versehenen Rastelementen besteht, die sich in Richtung einer Längsachse des Rastankers zusammendrücken lassen und beim Loslassen durch die elastische Rückstellkraft wieder in ihre Ausgangslage zurückkehren. Jeweils eines der beiden Rastelemente jedes Rastankers ist etwas länger als das andere, so dass es sich beim Zusammendrücken über das kürzere Rastelement legen kann, wodurch sich der Querschnitt des zusammengedrückten Rastankers im Bereich der Widerhaken weiter verkleinern lässt. Die Widerhaken sind zu einer Spitze am freien Ende des Rastankers hin angeschrägt, so dass sie sich leicht in eine von mehreren Durchtrittsöffnungen einführen lassen, die an entsprechenden Stellen in einem umlaufenden Flansch vorgesehen sind, der randseitig über die Innenseite eines Deckelträgerblechs übersteht. Nach dem Einclipsen hintergreifen die Widerhaken den Rand der Airbagdurchtrittsöffnung und halten den Deckel in seinem Sitz fest. Die Widerhaken sind weiter auch zu einem Fuß des Rastankers hin angeschrägt, so dass der Rand der Airbagdurchtrittsöffnung die Rastelemente unter Freigabe des Deckels zusammendrückt, wenn der sich aufblasende Airbag einen Druck auf die Innenseite des Deckelträgerblechs ausübt. Hier sollen der Deckel, das Fangband und das Verankerungselement als eine vom Airbagmodul getrennte Baugruppe ausgebildet sein, deren Komponenten sämtlich vom Airbagmodul unabhängig sind. Die aus dem Deckel, dem Fangband und dem Verankerungselement bestehende Baugruppe soll somit hier so gestaltet sein, dass sie vormontiert werden kann, so dass beim Anbringen nur der Deckel am Rand der Airbagaustrittöffnung eingerastet und das Verankerungselement durch einen Schlauch für das Fangbandes gesteckt und dann am Halteelement befestigt werden braucht. Durch die Trennung vom Airbagmodul und durch eine entsprechende, von der Rückseite des Verkleidungsteils her zugängliche Anbringung des Airbagmoduls kann dieses zur Inspektion oder Wartung entnommen werden, ohne die Abdeckung zu öffnen oder das Fangband zu lösen. Beim Aufdrücken des Deckels durch den sich aufblasenden Airbag wird dieser somit sofort von der Airbagaustrittöffnung abgehoben und z. B. in Verbindung mit einer Instrumententafel nach vorne in Richtung Windschutzscheibe weggeschleudert, wobei das Fangband ein unkontrolliertes Herumfliegen des Deckels und damit eine Gefährdung von Fahrzeuginsassen verhindert.

Weiter ist aus der EP 0 940 300 A1 eine Deckelanordnung für eine Airbagaustrittöffnung in einem Kraftfahrzeug bekannt, bei der der Deckel bei seinem Abheben von der Airbagaustrittöffnung mittels einem oder mehrerer Scharnierbänder während seiner Öffnungsbewegung auf einer definierten Bewegungsbahn gehalten wird. Dazu ist vorgesehen, dass das Scharnierband so am Deckel angebracht ist, dass dieses den zusammengefaltet hinter dem Verkleidungsteil angeordneten Airbag überspannt. Dadurch wird erreicht, dass der Airbag zu Beginn des Aufblasvorgangs zuerst auf das Fangband trifft und über dieses eine solche Öffnungskraft auf den Deckel ausübt, dass dieser sofort vollständig von der Airbagaustrittöffnung zur Freigabe derselben abgehoben wird und mit einem großen Anteil an Translationsbewegungen, d. h. wenig Rotation durch die spezielle Anbindung des Scharnierbandes z. B. in Verbindung mit einer Instrumententafel nach vorne in Richtung Windschutzscheibe verlagert wird. Gemäß einer weiteren beschriebenen Ausführungsform können auch zwei Scharnierbänder vorgesehen sein, die eine derartige Öffnungsbewegung mit einem großen Anteil an Translationsbewegungen begünstigt.

Weiter ist aus der DE 44 41 365 A1 eine Airbaganordnung für ein Fahrzeug bekannt, bei der ein eine Airbagaustrittöffnung verschließender Deckel in seiner Schließposition über sogenannte Magnetverbinder gehaltert ist. Dadurch soll einerseits in der Geschlossenstellung eine hinreichend stabile Verbindung gebildet und andererseits bei einem durch den Airbag erzeugten Öffnungsdruck eine weitgehend ungebremste sofortige Freigabe der Airbagaustrittöffnung durch Abheben des Deckels erreicht werden.

Aus der EP 0 846 600 A1 ist eine Anbindung eines eine Airbagaustrittöffnung verschließenden Deckels bekannt, bei der der Deckel mit einem Fangband gesichert ist, das ähnlich der EP 0 940 300 A1 nach einer sofortigen Abhebung des Deckels von der Airbagaustrittöffnung zu Beginn des Aktivierungsvorgangs der Sicherheitseinrichtung den Deckel nach vorne in Richtung Windschutzscheibe mit einer im Wesentlichen translatorischen Deckelkinematik überführt.

Weiter ist aus der DE 198 23 048 A1 eine Instrumententafel für ein Kraftfahrzeug aus Kunststoff bekannt, bei der eine Airbagaustrittöffnung mittels eines Deckels abgedeckt ist, der ein selbständiges Pressteil ist. Zur Versteifung und Stabilisierung der Form des Deckels bei Betriebsgrenztemperaturen ist auf der Innenfläche des Deckels ein Profilblech befestigt. Ein derartiges Profilblech zur Versteifung des Deckels ist auch aus der DE 198 15 267 A1 bekannt.

Weiter ist aus der DE 198 47 386 A1 eine Sicherheitseinrichtung für ein Kraftfahrzeug bekannt, bei der in dem Zwischenraum zwischen dem Airbagmodul und dem Deckel eine formstabile Füllkörpereinheit angeordnet ist, die den Zwischenraum ausfüllt. Die Füllkörpereinrichtung weist eine entsprechend der gewünschten Druckverteilung zwischen dem expandierenden Airbag und dem Deckel gestaltete gewölbte Oberfläche auf, an der der expandierende Airbag angreift. Je mehr Volumen des Zwischenraumes durch die Füllkörpereinheit abgedeckt ist, desto früher wird die Expansion der Airbageinheit auf die Abdeckung übertragen. Mit einem derartigen Aufbau soll erreicht werden, dass der Deckel frühzeitig und gezielt durch den sich aufblasenden Airbag von der Airbagaustrittöffnung abgehoben wird, wobei die Füllkörpereinrichtung so ausgestaltet ist, dass in Verbindung mit einer Deckelanordnung in einem Beifahrerseitenbereich einer Instrumententafel der Deckel zuerst mit seinem insassennahen Ende vom Airbagaustrittöffnungsbereich abgehoben wird, für eine möglichst frühzeitige Freigabe der Airbagaustrittöffnung und ein Aufblasen des Airbags in Richtung auf den Fahrzeuginsassen hin.

Aufgabe der Erfindung ist es, eine Sicherheitseinrichtung für ein Fahrzeug, insbesondere für ein Kraftfahrzeug, zu schaffen, mit der eine noch bessere gezielte Expansion eines Airbags im aktivierten Zustand der Sicherheitseinrichtung möglich ist.

Diese Aufgabe wird gelöst mit den Merkmalen des Anspruchs 1.

Gemäß Anspruch 1 ist der Deckel so am Öffnungsrandbereich der Airbagaustrittöffnung angebunden, dass dieser durch den sich aufblasenden Airbag zuerst mit einem einer Fahrzeuginsassensitzposition abgewandten insassenfernen Deckelende von der Airbagaustrittöffnung abhebbar ist und mit einem der Fahrzeuginsassensitzposition zugewandten insassennahen Deckelendbereich, der dem insassenfernen Deckelende gegenüberliegt, weiterhin in einem Deckel-Haltebereich der Airbagaustrittöffnung mittels einer Halteverbindung gehalten ist dergestalt, dass zwischen dem Verkleidungsteil und dem abgehobenen Deckelbereich ein seitlicher und dem Deckel-Haltebereich gegenüberliegender hinterer Airbagaustrittspalt ausgebildet ist, durch den hindurch ein Airbagteilbereich nicht direkt in Richtung auf die zugeordnete Fahrzeuginsassensitzposition in den Fahrzeuginnenraum hinein entfaltbar ist. Im weiteren Verlauf des Aufblasens des Airbags ist die Halteverbindung zwischen dem insassennahen Deckelendbereich und dem Deckel-Haltebereich der Airbagaustrittöffnung lösbar zum vollständigen Abheben des Deckels von der Airbagaustrittöffnung und damit zur vollständigen Freigabe der Airbagaustrittöffnung für ein Aufblasen des Airbags in Richtung zur zugeordneten Fahrzeuginsassensitzposition hin.

Vorteilhaft wird bei einem derartigen Aufbau der Sicherheitseinrichtung erreicht, dass hier die Gefahr einer Beeinträchtigung für Insassen, die sich im Moment der Airbagentfaltung außerhalb einer normalen Sitzposition befinden, d. h. eine sogenannte out-of-position-Situation gegeben ist, wie dies beispielsweise bei im Instrumententafelbereich stehenden Kindern oder nicht angeschnallten Fahrzeuginsassen regelmäßig der Fall sein kann, erheblich reduziert werden kann, da sich bei der erfindungsgemäßen Sicherheitseinrichtung der Airbag nicht zuerst in Richtung auf den Fahrzeuginsassen zu entfaltet, sondern zu Beginn des Entfaltungsvorgangs lediglich durch den zwischen dem Verkleidungsteil und dem abgehobenen Deckelbereich ausgebildeten Airbagaustrittspalt hindurch in Richtung Fahrzeuginnenraum austreten kann. Durch diese gezielte Beeinflussung der Entfaltungskinematik des Airbags können die insbesondere zu Beginn des Aufblasvorgangs auftretenden Belastungsspitzen erheblich reduziert werden, da hier dann der Energieeintrag zeitlich gestreckt wird. Nach dem Abbau dieser Belastungsspitzen, d. h. der anfänglichen Airbagaggressivität kann dann die Halteverbindung zwischen dem insassennahen Deckelende und dem Verkleidungsteil gelöst werden, so dass die gesamte Airbagaustrittöffnung für ein vollständiges Aufblasen des Airbags mit verringerter Aggressivität in Richtung auf den Fahrzeuginsassen zu erfolgen kann. Mit einem derartigen Aufbau einer Sicherheitseinrichtung wird somit weiterhin das volle Schutzpotential eines Airbags ausgenutzt, wobei jedoch die Gefahr der Beeinträchtigungen von out-of-positon befindlichen Fahrzeuginsassen durch Reduzierung der anfänglichen Airbagaggressivität erheblich verringert wird. Besonders bevorzugt ist hierbei der Airbagaustrittspalt so ausgebildet, dass sich der Airbag zunächst an den seitlichen Deckelrandbereichen, d. h. tangential zum Insassen entfaltet. Der hintere Airbagaustrittspaltbereich ist hierzu vorzugsweise durch entsprechende Maßnahmen zu sperren. Entsprechende Ausführungsformen und vorteilhafte Ausgestaltungen werden nachfolgend noch näher erläutert:

Gemäß einer weiteren besonders bevorzugten Ausgestaltung der Erfindung ist vorgesehen, dass der Deckel zu Beginn des Abhebevorgangs um eine im Deckel-Haltebereich liegende Deckel-Schwenkachse aufschwenkbar ist. Dadurch wird eine einfache und gute Deckelkinematik zu Beginn des Aufblasvorgangs erreicht.

Besonders bevorzugt weist der Decke! dabei eine im Wesentlichen rechteckige Form auf, so dass eine erste, insassenferne Rechteckseite sowie die beiden seitlichen Rechteckseiten wenigstens bereichsweise mittels einer ersten Verbindungseinrichtung mit einer vorgebbaren ersten Haltekraft am zugeordneten Austrittöffnungsrandbereich gehalten ist. Eine zweite, insassennahe Rechteckseite, die der ersten, insassenfernen Rechteckseite in etwa gegenüberliegt, bildet dann den insassennahen Deckelendbereich aus und ist mittels einer zweiten Verbindungseinrichtung mit einer vorgebbaren zweiten Haltekraft am Deckel-Haltebereich gehalten. Die zweite Haltekraft ist dabei größer als die erste Haltekraft, so dass bei einer durch das Aufblasen des Airbags bedingten Krafteinwirkung auf die Deckelunterseite, die größer als die erste Haltekraft und kleiner als die zweite Haltekraft ist, der Deckel mit der ersten Rechteckseite und wenigstens zum Teil mit den seitlichen Rechteckseiten vom Airbagaustrittöffnungsrandbereich unter Ausbildung des Airbagaustrittspaltes abhebt. Bei einer sich daran anschließenden Krafterhöhung durch weiteres Aufblasen des Airbags und Überschreiten der zweiten Haltekraft hebt der Deckel dann auch im Deckel-Haltebereich von dem Airbagaustrittöffnungsrandbereich ab. Ein derartiger Aufbau kann auf unterschiedliche Art und Weise vorteilhaft realisiert werden. Gemäß einer besonders bevorzugten Ausführungsform ist hierzu vorgesehen, die zweite Verbindungseinrichtung durch eine durchgehende Nut-Feder-Verbindung im Deckel-Haltebereich an dem zugeordneten Airbagaustrittöffnungsrandbereich auszubilden. Dagegen kann die erste Verbindungseinrichtung an der ersten Rechteckseite durch einzelne, voneinander beabstandete Rastverbindungen ausgebildet sein, während wiederum die erste Verbindungseinrichtung an den seitlichen Rechteckseiten jeweils durch eine durchgehende Nut-Feder-Verbindung und/oder durch einzelne, voneinander beabstandete Rastverbindungen gebildet ist. Derartige Nut-Feder-Verbindungen und voneinander beabstandete Rastverbindungen sind mit einer hohen Funktionssicherheit auf relativ einfache Weise preiswert herstellbar. Besonders bevorzugt können dabei die einzelnen, voneinander beabstandeten Rastverbindungen durch einzelne entsprechenden Rastausnehmungen zugeordnete Rastnasen gebildet sein. Alternativ oder zusätzlich zu dieser konkreten Lösung kann der insassennahe Deckelendbereich ferner auch noch im Deckel-Haltebereich mittels wenigstens einem zusätzlichen Scharnierband z. B. an einem unter dem Verkleidungsteil angeordneten Halterahmen so festgelegt sein, dass dieses Scharnierband dann definiert aus einem Formschluss herausklingt, wenn z. B. bestimmte Öffnungswinkel erreicht werden.

Zusätzlich oder alternativ kann die Deckelunterseite auch so ausgebildet sein, dass der Airbag zu Beginn des Aufblasvorgangs im Wesentlichen eine Aufdrückkraft auf den insassenfernen Deckelendbereich ausübt. Vorteilhaft ist hierzu an der Deckelunterseite ein diese flächig abdeckendes Verstärkungsblech angebracht, das mit einem dem insassenfernen Deckelbereich zugeordneten insassenfernen Blechbereich weiter in Richtung zu dem Airbag hin absteht als ein sich daran in etwa in einem bezogen auf die Erstreckungsrichtung zwischen dem insassennahen und insassenfernen Deckelende im mittleren Bereich als Übergangsbereich anschließender und dem insassennahen Deckelbereich zugeordneter Blechbereich. Dadurch wird erreicht, dass der sich aufblasende Airbag zu Beginn des Aufblasvorgangs im Wesentlichen zuerst auf den insassenfernen Blechbereich auftrifft und vorzugsweise ein Öffnungsmoment um eine im Deckel-Haltebereich liegende Deckel-Schwenkachse bewirkt. Konkret kann hierzu das Verstärkungsblech wenigstens im insassenfernen Blechbereich als einfaches und preiswertes Hohlprofil doppelrandig ausgebildet sein. Ein derartiger Aufbau ist mit relativ wenig Aufwand einfach herzustellen.

Um die Formhaltigkeit bzw. Steifigkeit des Deckels und auch des Verstärkungsbleches noch weiter zu erhöhen, können wenigstens im insassennahen, vorzugsweise im gesamten Blechbereich Versteifungssicken vorgesehen sein.

Grundsätzlich kann das Verstärkungsblech auf verschiedene Art und Weise mit der Deckelunterseite verbunden werden. Eine bevorzugte Festlegungsmöglichkeit ist das Toxen und/oder Nieten zur Festlegung des Verstärkungsbleches an der Deckelunterseite.

Besonders vorteilhaft kann der Übergangsbereich zwischen dem insassennahen und dem insassenfernen Blechbereich konvex gewölbt ausgebildet sein zur Ausbildung einer richtungsgebenden Rampe für den sich aufblasenden Airbag.

Um zu verhindern, dass der Deckel im vollständig von der Airbagaustrittöffnung abgehobenen Zustand unkontrolliert im Fahrzeuginnenraum umherfliegt, ist gemäß einer weiteren bevorzugten Ausgestaltung der Erfindung vorgesehen, dass der Deckel mit wenigstens einem Fangband gesichert ist. Dieses Fangband ist einerseits am Deckel in einem deckelseitigen Anbindungspunkt und andererseits im Bereich der Airbagaustrittöffnung auf der dem Fahrzeuginnenraum abgewandten Seite des Verkleidungsteiles in einem weiteren Anbindungspunkt angebunden.

Entsprechend einer besonders vorteilhaften konkreten Ausführungsform der vorliegenden Erfindung ist vorgesehen, dass das wenigstens eine Fangband einerseits im Bereich des Airbagaustrittöffnungsrandes unterhalb des insassenfernen Deckelendes angebunden ist und andererseits am insassennahen Deckelendbereich angebunden ist. Dadurch wird erreicht, dass das wenigstens eine Fangband im nicht aktivierten Grundzustand der Sicherheitseinrichtung den zusammengefalteten Airbag überspannt und von oben her wenigstens bereichsweise abdeckt. Das wenigstens eine Fangband ist dabei vorzugsweise so dimensioniert, dass der sich aufblasende Airbag zu Beginn des Aufblasvorgangs das wenigstens eine Fangband wenigstens bereichsweise in eine Anlageverbindung an der Deckelunterseite überführt zur gezielten Aufbringung der durch das Aufblasen des Airbags auf den Deckel einwirkenden Aufdrückkraft. Weiter kann vorgesehen sein, dass bei einer bestimmten vorgebbaren anfänglichen Aufdrückkraft der Deckel mit dem insassenfernen Deckelende unter Ausbildung des Airbagaustrittspaltes von der Airbagaustrittöffnung so abhebt, dass das wenigstens eine Fangband den hinteren Airbagaustrittspaltbereich, der dem Deckel-Haltebereich gegenüberliegt, sperrt, so dass sich der Airbag besonders vorteilhaft nur durch die beiden seitlichen Airbagaustrittspaltbereiche in etwa tangential zu den seitlichen Deckelrandbereichen in den Fahrzeuginnenraum hinein entfaltet. Durch diese seitliche tangentiale Airbagentfaltung zu Beginn des Aufblasvorgangs wird vorteilhaft eine Reduzierung der Belastungsspitzen erreicht und dadurch die Aggressivität des Airbags insbesondere im Hinblick auf out-of-position-Situationen entschärft. Im weiteren Verlauf des Airbagaufblasvorgangs wird dann durch Erhöhen der Aufdrückkraft der Deckel insgesamt von der Airbagaustrittöffnung abgehoben, wobei das wenigstens eine Fangband den Deckel gegen ein unkontrolliertes Wegschleudern sichert.

Ein derartiges Fangband kann grundsätzlich auch durch z. B. einen Blechstreifen oder dergleichen gebildet sein. Besonders bevorzugt ist jedoch eine Ausführungsform, bei der das wenigstens eine Fangband durch ein einziges Segel ausgebildet ist, das sich in etwa über die gesamte Deckelbreite zwischen den seitlichen Deckelrandbereichen erstreckt. Ein derartiges Segel ist relativ einfach und preiswert mit hoher Funktionssicherheit herstellbar.

Entsprechend einer vorteilhaften konkreten Ausgestaltung weist das Segel im Bereich des deckelseitigen Anbindungspunktes einen Schutzlappen auf, der sich beim durch die Aufdrückkraft des Airbags bedingten Abheben des Deckels vom Deckel-Haltebereich zwischen den sich aufblasenden Airbag und den Kantenbereich des insassennahen Deckelendes legt zur Verhinderung einer Beschädigung des Airbags. Besonders bevorzugt ist der Schutzlappen hierbei im nicht aktivierten Grundzustand der Sicherheitseinrichtung mit einem freien Ende im Bereich des Airbagaustrittöffnungsrandbereiches unterhalb des insassennahen Deckelendbereiches und unterhalb des deckelseitigen Anbindungspunktes festgelegt, vorzugsweise angeklebt, für ein definiertes Überführen des Schutzlappens als Kantenschutz in die das insassennahe Deckelende abdeckende Schutzposition beim durch die Aufdrückkraft des Airbags bedingten Abheben des Deckels vom Deckel-Haltebereich. Ein derartiger Schutzlappen erhöht somit die Funktionssicherheit der Sicherheitseinrichtung insgesamt, da vermieden wird, dass eventuelle scharfkantige Bereiche eine Zerstörung des sich aufblasenden Airbags bewirken. Durch die Anbindung des Schutzlappens mittels Kleben wird vorteilhaft die Funktionssicherheit des Schutzlappens sichergestellt, da hierdurch erreicht wird, dass nach dem Lösen der z. B. Klebeverbindung der Schutzlappen auf jeden Fall in seine Schutzposition überführt wird. Die Gefahr eines losen Schutzlappens besteht darin, dass dieser durch den sich aufblasenden Airbag eventuell im Bereich der Deckelunterseite angedrückt wird und damit seine Schutzwirkung nicht entfalten kann.

Gemäß einer besonders bevorzugten Weiterbildung ist ferner wenigstens ein zweites Fangband vorgesehen, das einerseits ebenfalls im Bereich des Airbagaustrittöffnungsrandes unterhalb des insassenfernen Deckelendes angebunden ist und das andererseits am insassenfernen Deckelendbereich angebunden ist. Dadurch wird erreicht, dass bei im Verlauf des Aufblasvorgang gestrafften Fangbändern und vollständig abgehobenem Deckel dieser gezielt und geführt nach hinten in Richtung vom Fahrzeuginsassen wegklappbar ist.

Der insassenferne Deckelendbereich wird dabei gemäß einer besonders bevorzugten konkreten Ausführungsform der Erfindung so lange unter gleichzeitiger Beibehaltung der Deckel-Halteverbindung zwischen dem insassennahen Deckelendbereich und dem Deckel-Haltebereich vom zugeordneten Airbagaustrittöffnungsrandbereich abgehoben, bis das wenigstens eine zweite Fangband gestrafft ist oder die Aufdrückkraft größer ist als die Haltekraft der Deckel-Halteverbindung. Dadurch wird eine insgesamt sehr gute Deckelkinematik in Verbindung mit einer besonders vorteilhaften Airbagentfaltungskinematik erzielt.

Konkret können dabei die Anbindungspunkte vorteilhaft jeweils durch eine Befestigungsstange, die vorzugsweise einen Rohrquerschnitt aufweist, gebildet sein, an der das Segel jeweils mittels Schlaufen, vorzugsweise mittels voneinander beabstandeter Schlaufen, festgelegt ist. Vorteilhaft ist hierzu ein erstes Segelende zur Ausbildung wenigstens einer Schlaufe für die Festlegung am zweiten Anbindungspunkt umgenäht, während zur Ausbildung wenigstens einer Schlaufe für die Festlegung am ersten deckelseitigen Anbindungspunkt ein dem ersten Segelende gegenüberliegendes zweites Segelende so umgenäht ist, dass ein davon wegragender Schutzlappen ausgebildet ist. Ein derartiges Segel ist vom Zuschnitt her einfach und mit relativ wenig Aufwand insgesamt herstellbar, d. h., dass lediglich ein einziger Streifen oder Lappen eines Segelmaterials benötigt wird, der durch das geschilderte Vernähen sowohl die Schlaufen zur Festlegung an den beabstandeten Anbindungspunkten als auch den Schutzlappen ausbildet.

Vorzugsweise ist das Segel durch ein Gewebematerial gebildet, bei dem die Kett- und Schussfäden zur Vermeidung eines Auskämmens vorzugsweise in einem Winkel von 30 bis 60°, höchst bevorzugt in einem Winkel von 45° miteinander verwoben sind.

Gemäß einer alternativen Ausführungsform sind an den sich im Bereich zwischen dem insassennahen und insassenfernen Deckelenden erstreckenden gegenüberliegenden seitlichen Deckelrandbereichen jeweils zwei Fangbänder vorgesehen. Dabei ist ein erstes Fangband einerseits in einem ersten Anbindungspunkt am insassenfernen Deckelbereich und andererseits in einem zweiten Anbindungspunkt, der bezogen auf die Airbagaustrittöffnungsebene in etwa in gerader Verlängerung unterhalb des ersten Anbindungspunktes im insassenfernen Deckelbereich liegt, angebunden. Ein zweites Fangband ist hierbei einerseits am oder benachbart zum zweiten Anbindungspunkt des ersten Fangbandes und andererseits in einem dritten Anbindungspunkt am insassennahen Deckelbereich angebunden, so dass die ersten und zweiten Fangbänder im nicht aktivierten Grundzustand ungespannt im Bereich hinter dem Verkleidungsteil angeordnet sind. Der Airbag hebt hier zu Beginn des Aufblasvorgangs das insassenferne Deckelende so lange ab, bis das erste Fangband gestrafft ist. Anschließend wird dann durch die durch das Aufblasen des Airbags bedingte Erhöhung der Aufdrückkraft die Deckel-Halteverbindung des Deckels im Deckel-Haltebereich gelöst zur Freigabe der gesamten Airbagaustrittöffnung, wobei der Deckel so lange abgehoben wird, bis auch das zweite Fangband gestrafft ist. Anschließend kann dann der Deckel mittels der gestrafften seitlichen Fangbänder besonders vorteilhaft geführt nach hinten in Richtung vom Fahrzeuginsassen weggeklappt werden. Mit einem derartigen Aufbau ergibt sich eine besonders vorteilhafte Deckelkinematik was sich insgesamt vorteilhaft auf die gesamte Funktionssicherheit der Sicherheitseinrichtung auswirkt. Vorteilhaft ist dabei wenigstens das wenigstens eine erste Fangband so ausgebildet, das dieses den hinteren Airbagaustrittspaltbereich, der dem Deckel-Haltebereich gegenüberliegt, sperrt, so dass sich der Airbag zu Beginn des Aufblasvorgangs nur durch die beiden seitlichen Airbagaustrittspaltbereiche in etwa tangential zu den seitlichen Deckelrandbereichen mit den zuvor bereits ausführlich erläuterten Vorteilen in den Fahrzeuginnenraum hinein entfaltet. Konkret ist hier z. B. das erste Fangband durch ein Segel ausgebildet, das sich in etwa über die gesamte Deckelbreite zwischen den seitlichen Deckelrandbereichen erstreckt. Grundsätzlich können jedoch sowohl das erste als auch das zweite Fangband als derartiges Segel ausgebildet sein, so dass bei einem derartigen Aufbau das zweite Fangband den hinteren Airbagaustrittspaltbereich im Wesentlichen sperren würde.

Entsprechend einer weiteren vorteilhaften Ausführungsform der Erfindung ist vorgesehen, dass die nicht am Deckel liegenden Anbindungspunkte durch wenigstens eine Befestigungsstange gebildet sind, die an einem unterhalb des Verkleidungsteiles angeordneten Halterahmen befestigt ist. Ein derartiger Halterahmen ist im Wesentlichen um die Airbagaustrittöffnung herum angeordnet und dient ferner in einer Doppelfunktion auch als Befestigungsmöglichkeit für weitere Bauteile, insbesondere zur Festlegung des Airbagmoduls, das den Airbag und einen Gasgenerator aufweist. Gleichzeitig kann an diesem Halterahmen auch ein eventuell vom Segel wegragender Schutzlappen durch z. B. Kleben festgelegt werden.

Gemäß einer besonders bevorzugten Verwendung ist vorgesehen, dass der Deckel eine Airbagklappe im beifahrerseitigen Bereich einer Instrumententafel ist. Bei einer derartigen Verwendung ist der insassennahe Deckelendbereich im der Windschutzscheibe abgewandten hinteren Instrumententafelbereich und der insassenferne Deckelendbereich im windschutzscheibennahen vorderen Instrumententafelwandbereich liegend angeordnet. Die seitlichen Deckelbereiche liegen einander in Instrumententafellängsrichtung gesehen gegenüber, wobei der Deckel vorzugsweise eine rechteckige Form aufweist. Sämtliche oben gemachten Betrachtungen sind somit jeweils bei einer derartigen Verwendung im Querschnitt durch die Instrumententafellängserstreckungsrichtung zu sehen, d. h. dass der Schnittverlauf in Fahrzeuglängsrichtung liegt.

Die Erfindung wird nachfolgend anhand einer Zeichnung näher erläutert:

Es zeigen:
- Fig. 1: eine schematische Darstellung einer Draufsicht auf einen Deckel einer Airbagaustrittöffnung,
- Fig. 2: eine schematische Schnittdarstellung entlang der Schnittlinie A-A bzw. E-E von Fig. 1,
- Fig. 3: eine schematische Schnittdarstellung entlang der Schnittlinie B-B von Fig. 1,
- Fig. 4: eine schematische Schnittdarstellung entlang der Schnittlinie C-C von Fig. 1,
- Fig. 5: eine schematische Schnittdarstellung entlang der Schnittlinie D-D von Fig. 1,
- Fig. 6: eine schematische Schnittdarstellung entlang der Schnittlinie F-F von Fig. 1,
- Fig. 7: eine schematische Schnittdarstellung entlang der Schnittlinie G-G von Fig. 5,
- Fig. 8: eine schematische Schnittdarstellung entlang der Schnittlinie H-H von Fig. 1,
- Fig. 9: eine schematische Darstellung einer Draufsicht auf ein Segel als Fangband,
- Fig. 10: eine schematische Schnittdarstellung entlang der Schnittlinie I-I von Fig. 9,
- Fig. 11: eine schematische Schnittdarstellung entlang der Schnittlinie C-C von Fig. 1, wobei die Sicherheitseinrichtung im nicht aktivierten Grundzustand gezeigt ist,
- Fig. 12: eine schematische Schnittdarstellung von Fig. 11, wobei die Sicherheitseinrichtung in einer ersten Aufblasposition gezeigt ist,
- Fig. 13: eine schematische Schnittdarstellung von Fig. 11, wobei die Sicherheitseinrichtung in einer zweiten Aufblasposition gezeigt ist,
- Fig. 14: eine schematische Schnittdarstellung von Fig. 11, wobei die Sicherheitseinrichtung in einer dritten Aufblasposition gezeigt ist,
- Fig. 15: eine schematische Darstellung einer Draufsicht der Sicherheitseinrichtung in der ersten Aufblasposition,
- Fig. 16: eine schematische Darstellung einer Frontansicht der Sicherheitseinrichtung in der ersten Aufblasposition,
- Fig. 17: eine schematische Darstellung einer Draufsicht der Sicherheitseinrichtung in der zweiten Aufblasposition,
- Fig. 18: eine schematische Darstellung einer Frontansicht der Sicherheitseinrichtung in der zweiten Aufblasposition,
- Fig. 19: eine schematische Darstellung einer Draufsicht der Sicherheitseinrichtung in der dritten Aufblasposition,
- Fig. 20: eine schematische Darstellung einer Frontansicht der Sicherheitseinrichtung in der dritten Aufblasposition,
- Fig. 21: eine schematische Schnittdarstellung in Fahrzeuglängsrichtung durch eine alternative Ausführungsform der Sicherheitseinrichtung im nicht aktivierten Grundzustand,
- Fig. 22: eine schematische Schnittdarstellung von Fig. 21, wobei die Sicherheitseinrichtung in einer ersten Aufblasposition gezeigt ist, und
- Fig. 23: eine schematische Schnittdarstellung von Fig. 21, wobei die Sicherheitseinrichtung in einer zweiten Aufblasposition gezeigt ist.

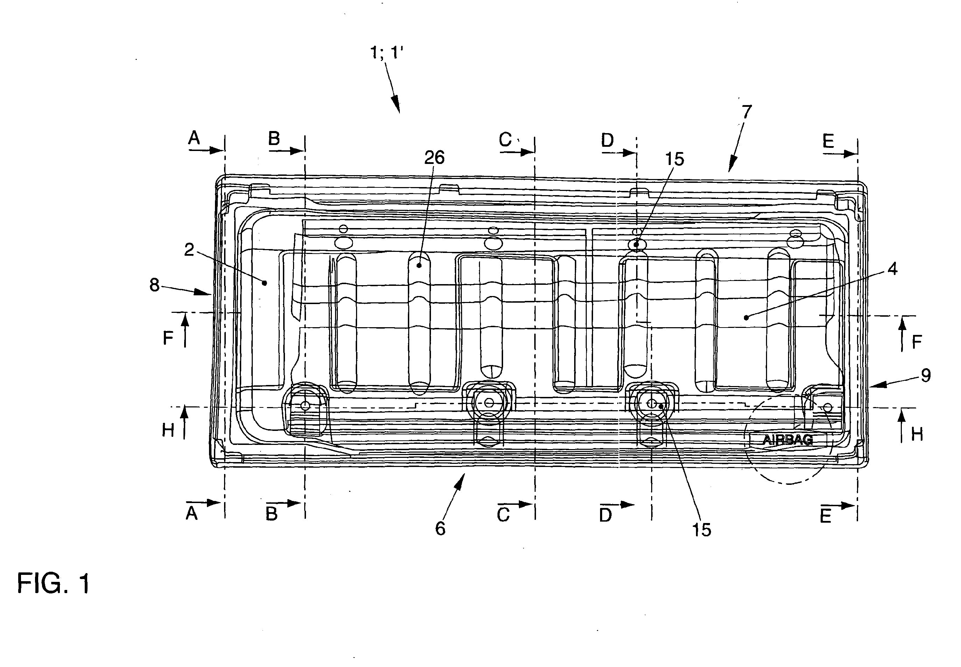

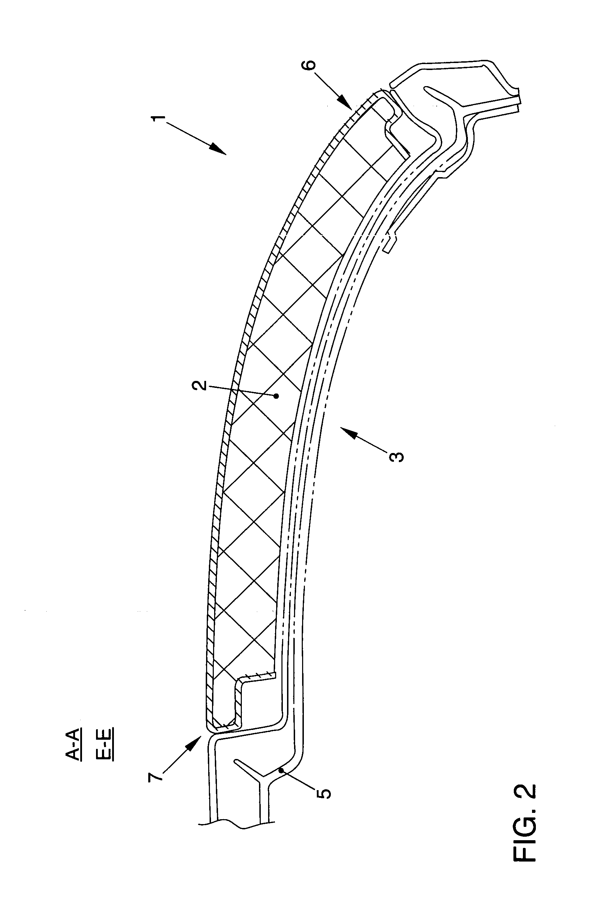

In Fig. 1 ist schematisch in einer Draufsicht eine Sicherheitseinrichtung 1 dargestellt, wobei nur ein Deckel 2 einer Airbagaustrittöffnung 3 gezeigt ist. Aus Übersichtlichkeitsgründen sind die die Airbagaustrittöffnung 3 bildenden, zum Deckel 2 benachbarten Bauteile in Fig. 1 weggelassen. In den nachfolgenden Schnittdarstellungen durch den Deckel 2 der Sicherheitseinrichtung 1 sind diese Bauteile jeweils zum Teil mit eingezeichnet. Der Deckel 2 weist eine rechteckige Form auf, wobei an der Deckelunterseite ein diese flächig abdeckendes Verstärkungsblech 4 angebracht ist. Eine exakte Beschreibung der jeweiligen Ausführung des Deckels 2 und des Verstärkungsblechs 4 im einzelnen und deren Anordnung zueinander erfolgt in Verbindung mit den nachfolgenden Fig. 2 bis 8:

In Fig. 2 ist schematisch eine Schnittdarstellung entlang der Schnittlinie A-A bzw. E-E von Fig. 1 dargestellt. Der Deckel 2 ist dabei der Airbagaustrittöffnung 3 zugeordnet, die beispielhaft im beifahrerseitigen Bereich einer Instrumententafel 5 ausgebildet, so dass der Deckel 2 eine Airbagklappe in der Instrumententafel 5 ausbildet. Der Deckel 2 weist ein insassennahes Deckelende 6, das einer Beifahrersitzposition (nicht dargestellt) zugewandt ist, und ein insassenfernes Deckelende 7, das der Beifahrersitzposition abgewandt ist, auf. Aufgrund der randnahen Anordnung der beiden Schnittlinien A-A bzw. E-E an beiden seitlichen Rechteckseiten 8 und 9 ist der Airbagaustrittöffnungsrandbereich in der Instrumententafel 5 unterhalb des Deckels 2 teilweise strichliert dargestellt. Der Deckel 2 ist so an der Instrumententafel 5 angeordnet, dass die Schnittlinien A-A bzw. E-E in etwa in Fahrtrichtung verlaufen.

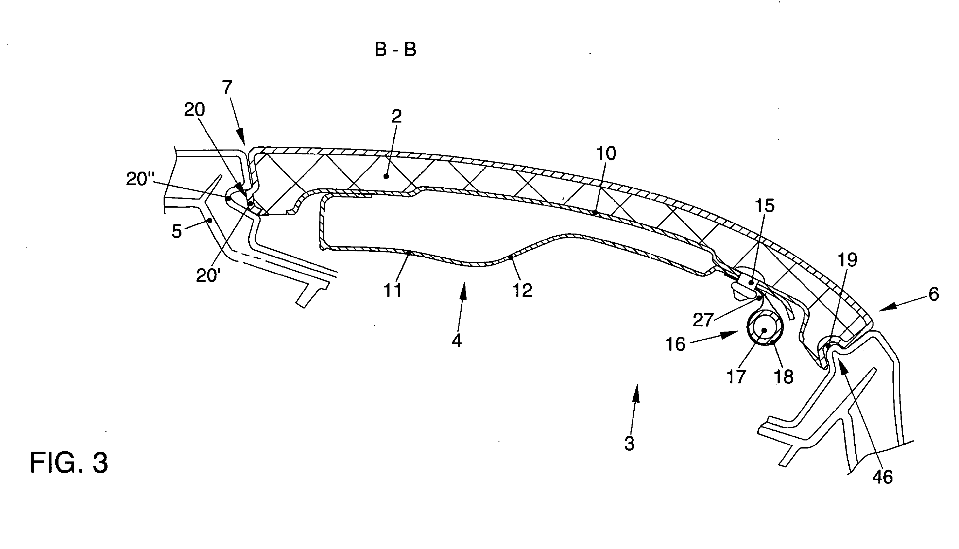

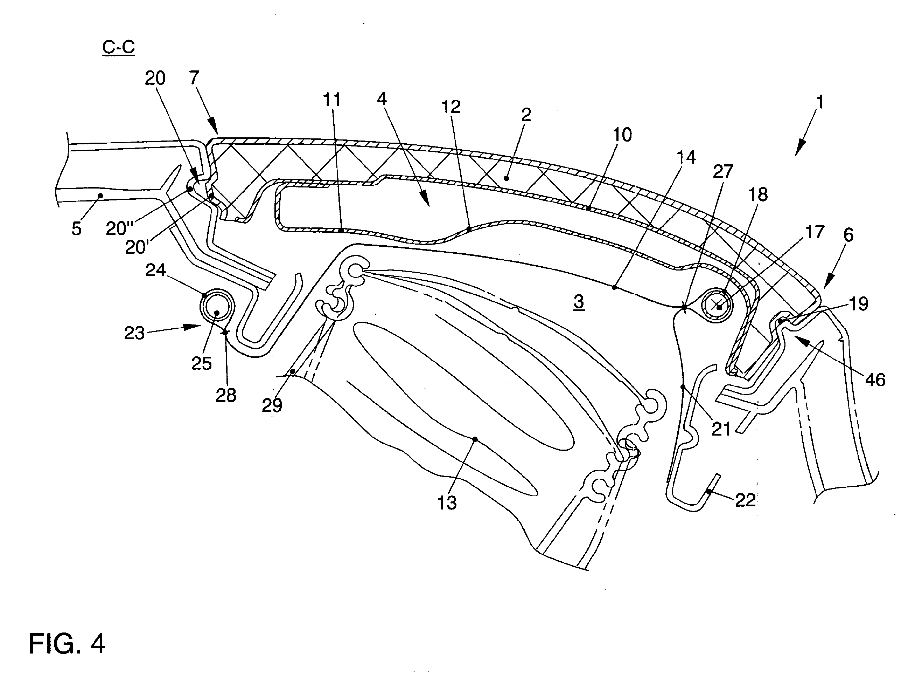

In Fig. 3 ist schematisch eine Schnittdarstellung entlang der Schnittlinie B-B von Fig. 1 dargestellt. Das Verstärkungsblech 4, das an der Unterseite des Deckels 2 angeordnet ist, ist als doppelwandiges Hohlprofil ausgebildet, wobei die beiden Blechlagen 10 und 11 des Verstärkungsbleches 4 im insassennahen Bereich, der dem insassennahen Deckelende 6 zugeordnet ist, weniger beabstandet sind als im insassenfernen Bereich, der dem insassenfernen Deckelende 7 zugeordnet ist. Der Übergangsbereich zwischen dem insassennahen und dem insassenfernen Blechbereich ist gewölbt zur Ausbildung einer richtungsgebenden Rampe 12 für einen hier nicht dargestellten Airbag 13. Am insassennahen Deckelende 6 ist an dessen Unterseite ein in den Fig.4ff. vollständig sichtbares Segel 14 zusammen mit dem Verstärkungsblech 4 mittels einer Nietverbindung 15 befestigt. Das Segel 14 erstreckt sich (Fig. 4ff) in etwa über die gesamte Deckellänge zwischen den beiden seitlichen Rechteckseiten 8 und 9 des Deckels 2. Ein dem insassennahen Deckelende 6 zugeordneter Anbindungspunkt 16 des Segels 14, der mittels der Nietverbindung 15 an der Deckelunterseite angebunden ist, ist durch eine Befestigungsstange 17 mit einem Rohrquerschnitt gebildet, an der das Segel 14 mit vorzugsweise mehreren Schlaufen 18 gehalten ist. Von dem durch die Befestigungsstange 17 gebildeten Anbindungspunkt 16 des Segels 14 beim insassennahen Deckelende 6 steht hier als Ausführungsvariante ein Schutzlappen 21 als Kantenschutz für den Airbag 13 ab, der mit einem karosseriefesten Halterahmen 22, der um die Airbagaustrittöffnung 3 umlaufend ausgeführt ist, verklebt ist. Auf die genaue Funktion des Schutzlappens 21 wird später noch eingegangen. Das Segel 14 überspannt den gesamten Airbagbereich und erstreckt sich bis zu einem zweiten Anbindungspunkt 23, der unterhalb des insassenfernen Deckelendes 7 am Halterahmen 22 angeordnet ist. Dazu ist an diesem Ende des Segels 14 ebenfalls wenigstens eine Schlaufe 24 gebildet, durch die eine Befestigungsstange 25 gesteckt ist, die jeweils in ihren Endbereichen am Halterahmen 22 festgelegt sein kann. Ein Airbagmodul 29 mit dem darin im nicht aktivierten Grundzustand gefalteten Airbag 13 ist hier in zwei unterschiedlichen Einbaupositionen gezeigt, wobei eine der beiden Einbaupositionen zur Unterscheidung strichliert dargestellt ist. Im Übergangsbereich zwischen dem insassennahen Deckelende 6 und der Instrumententafel 5 und somit dem zugeordneten Airbagaustrittöffnungsrandbereich ist eine im montierten Zustand in Instrumententafellängsrichtung als Fahrzeugquerrichtung durchgehende Nut-Feder-Verbindung 19 in einem Deckel-Haltebereich 46 ausgebildet. Im Übergangsbereich zwischen dem insassenfernen Deckelende 7 und der Instrumententafel 5 und somit im zugeordneten Airbagaustrittöffnungsrandbereich sind dagegen einzelne, voneinander beabstandete Rastverbindungen 20 ausgebildet, von denen eine beispielhaft in Fig. 3 dargestellt ist. Diese Rastverbindungen sind durch Rastnasen 20' gebildet, die in die Rastnut 20" eingreifen.

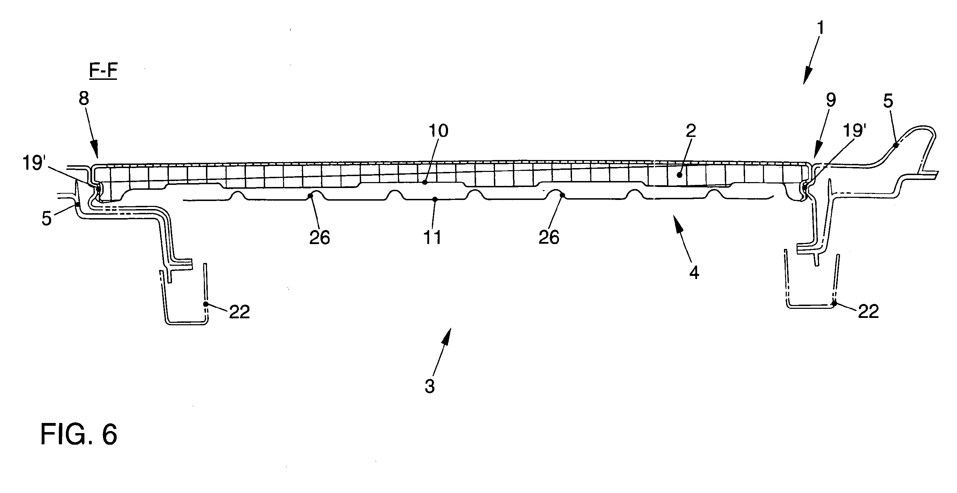

In Fig. 6 ist schematisch eine Schnittdarstellung entlang der Schnittlinie F-F von Fig. 1 dargestellt. Dabei ist durch den Deckel 2 in dessen Längserstreckung geschnitten, wobei die Längserstreckung des Deckels 2 der Fahrzeugquerrichtung bei der beispielhaften Anordnung der Sicherheitseinrichtung 1 in einem beifahrerseitigen Instrumententafelbereich entspricht. An den beiden seitlichen Rechteckseiten 8 und 9 ist ebenfalls wie am insassennahen Deckelende 6 eine durchgehende Nut-Feder-Verbindung 19' ausgebildet, so dass von der seitlichen Rechteckseite 8 als erstem U-Schenkel über das insassennahe Deckelende 6 als U-Basis zur zweiten seitlichen Rechteckseite 9 als zweitem U-Schenkel hin eine U-förmige durchgehende Nut-Feder-Verbindung 19, 19' ausgebildet ist. In Fig. 6 ist ferner gut zu erkennen, dass am Verstärkungsblech 4 in beiden Blechlagen 10 und 11 eine Vielzahl von Versteifungssicken 26 ausgebildet sein können. Jeweils im Randbereich der Airbagaustrittöffnung 3 unterhalb des Deckels 2 ist hier auch der Halterahmen 22 zu erkennen.

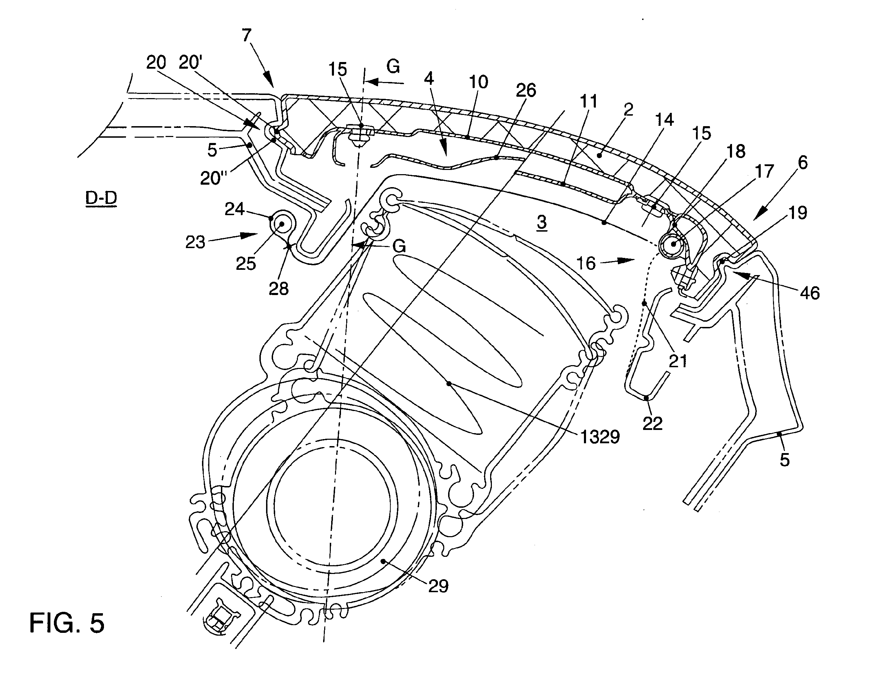

In Fig. 5 ist schematisch eine Schnittdarstellung entlang der Schnittlinie D-D von Fig. 1 dargestellt. Das als doppelwandiges Hohlprofil ausgeführte Verstärkungsblech 4 ist jeweils am insassennahen und insassenfernen Deckelende 6 und 7 mit seiner oberen Blechlage 10 an der Deckelunterseite des Deckels 2 mittels einer Nietverbindung 15 befestigt. Das Verstärkungsblech 4 erstreckt sich zwischen den beiden seitlichen Rechteckseiten 8 und 9. Im in Fig. 5 dargestellten Schnitt D-D ist wenigstens bereichsweise eine dieser Versteifungssicken 26 gezeigt. Der am Halterahmen 22 befestigte Schutzlappen 21 ist hier nur strichliert als Option dargestellt.

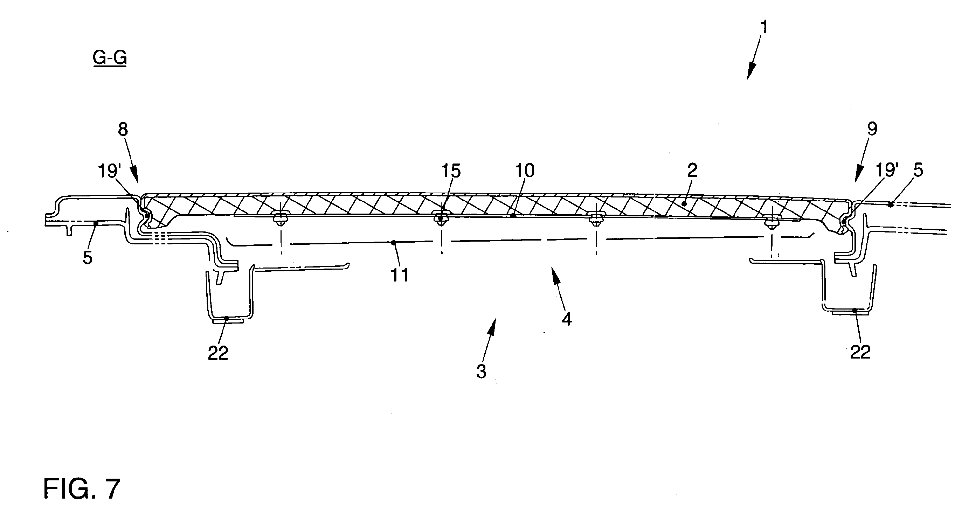

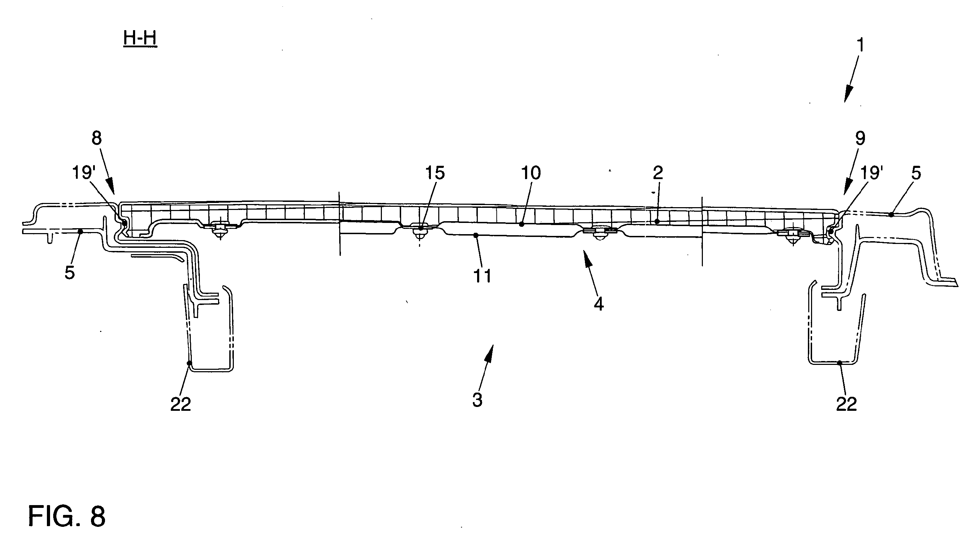

In Fig. 7 ist schematisch eine Schnittdarstellung entlang der Schnittlinie G-G von Fig. 5 dargestellt. Auch hier ist wieder an den seitlichen Rechteckseiten 8 und 9 die in die Bildebene hinein und heraus durchgehende Nut-Feder-Verbindung 19' mit dem Airbagaustrittöffnungsrandbereich der Instrumententafel 5 zu erkennen. Die obere Blechlage 10 des Verstärkungsbleches 4 ist mit der Unterseite des Deckels 2 mittels der Nietverbindungen 15 verbunden, wobei in der unteren Blechlage 11 jeweils einer Nietverbindung 15 eine Durchgangsöffnung zum Anbringen der Nietverbindung zugeordnet ist. Auch hier ist randseitig an der Airbagaustrittöffnung 3 jeweils der Halterahmen 22 zu erkennen. Die in Fig. 7 dargestellten Nietverbindungen 15 entsprechen der Anbindung des Verstärkungsbleches 4 am insassenfernen Deckelende 7, wobei die in Fig. 8 dargestellten Nietverbindungen 15 den Befestigungsstellen des Verstärkungsbleches 4 am insassennahen Deckelende 6 entsprechen. Die in Fig. 8 schematisch dargestellte Schnittdarstellung verläuft entlang der Schnittlinie H-H von Fig. 1.

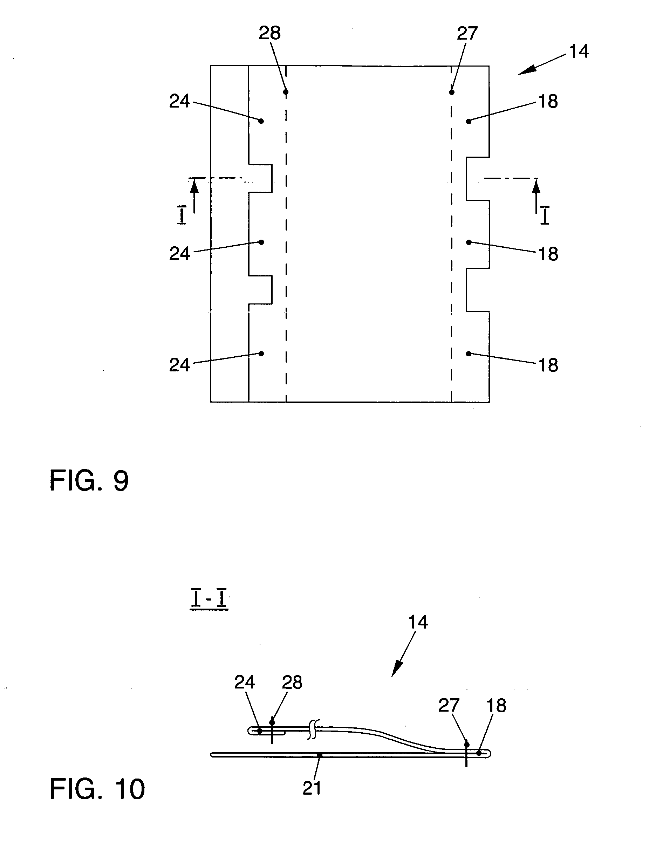

In Fig. 9 ist schematisch eine Draufsicht auf das Segel 14 dargestellt. Im montierten Zustand des Segels 14 weist der dem insassennahen Deckelende 6 zugeordnete Bereich drei Schlaufen 18 auf, durch die die Befestigungsstange 17 gesteckt ist (hier nicht mit dargestellt). Analog ist der zweite Anbindungspunkt 23 des Segels 14 an der gegenüberliegenden Seite durch die drei Schlaufen 24, durch die die Befestigungsstange 25 (nicht dargestellt) gesteckt ist, gebildet. Die Schlaufen 18 und 24 sind jeweils durch Umnähen mittels Nähten 27 und 28, die in Längsrichtung des Segels 14 verlaufen, gebildet. Wie dies aus Fig. 10, die schematisch eine Schnittdarstellung entlang der Schnittlinie I-I von Fig. 9 zeigt, ersichtlich ist, wird das Segel 14 im Bereich der auszubildenden Schlaufen 18 so umgenäht, dass der Schutzlappen 21 ausgebildet wird.

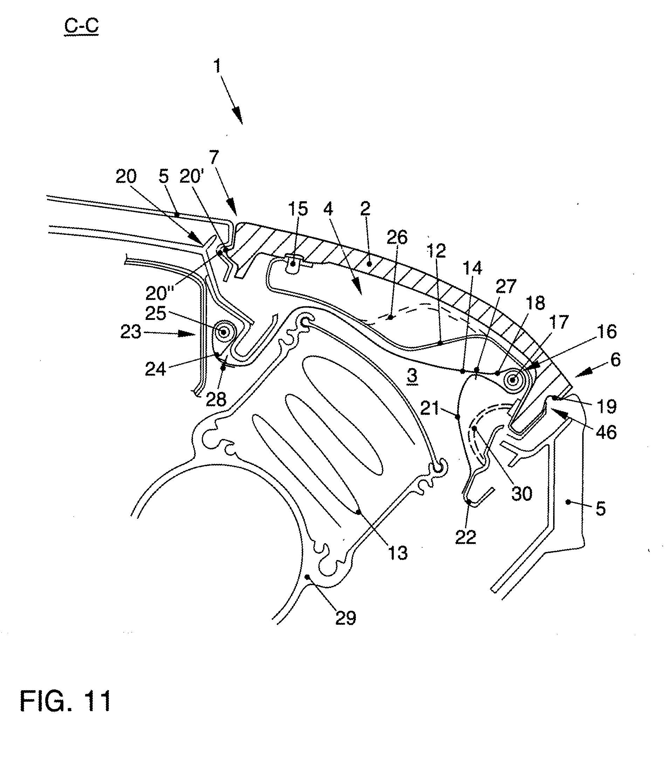

In den Fig. 11 bis 14 ist jeweils schematisch eine Schnittdarstellung entlang der Schnittlinie C-C von Fig. 1 im nicht aktivierten Grundzustand der Sicherheitseinrichtung 1 bzw. in verschiedenen Aufblaspositionen des Airbags 13 der Sicherheitseinrichtung 1 dargestellt, zur Erläuterung der Funktionsweise der Sicherheitseinrichtung 1:

In Fig. 11 ist der nicht aktivierte Grundzustand der Sicherheitseinrichtung 1 gezeigt. Der Airbag 13 befindet sich in einem zusammengefalteten Zustand in einem Airbagmodul 29. Das Segel 14 ist zwischen dem ersten Anbindungspunkt 16 und dem zweiten Anbindungspunkt 23 angeordnet und überspannt den Airbag 13 bzw. das Airbagmodul 29. Der Deckel 2 verläuft mit seiner Oberseite flächenbündig mit der Oberseite der Instrumententafel 5. Eine Versteifungssicke 26 des Verstärkungsbleches 4 ist strichliert zwischen den beiden Blechlagen 10 und 11 eingezeichnet. Am insassennahen Deckelende 6 kann zudem ein Scharnierband 30 angeordnet sein, das den Deckel 2 mit dem Halterahmen 22 verbindet. Das Scharnierband 30 ist nur strichliert in Fig. 11 dargestellt.

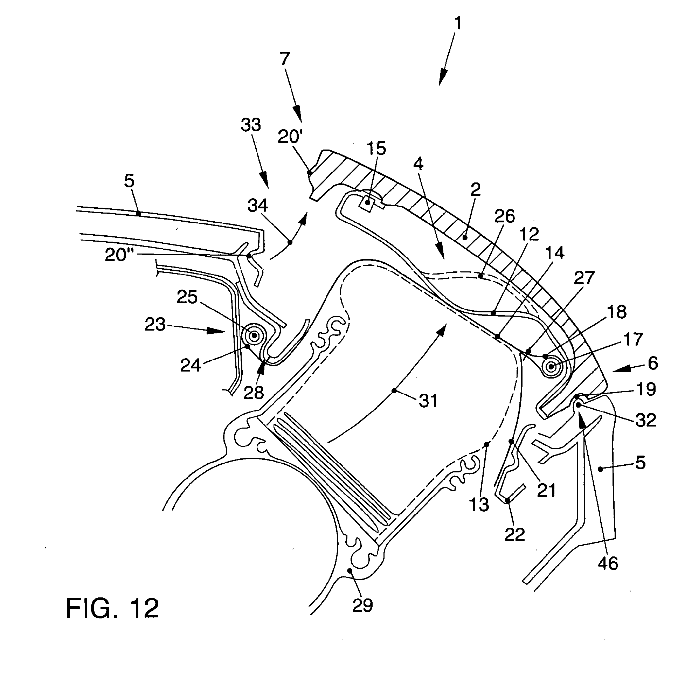

Bei der Aktivierung der Sicherheitseinrichtung 1 drückt der sich entfaltende Airbag 13 von unten gegen das Segel 14, das sich zusammen mit dem Airbag 13 am dickwandigen Verstärkungsblechbereich anlegt und somit eine Aufdrückkraft auf den Deckel 2 ausübt. Dies ist mit dem Pfeil 31 in Fig. 12 eingezeichnet. Durch die spezielle Ausbildung der Rastverbindung am Deckelende 7 durch einzelne Rastnasen 20' im Gegensatz zur ansonsten durchgehenden Nut-Feder-Verbindung 19, 19' ist am Deckelende 7 die Haltekraft geringer als am gegenüberliegenden Deckelende 6, so dass der Deckel 2 zuerst im Bereich des Deckelendes 7 unter Beibehaltung der Halteverbindung im Deckel-Haltebereich 46 am Deckelende 6 um eine dort gebildete Deckel-Schwenkachse 32 aufgeschwenkt wird. Die Deckel-Schwenkachse 32 wird dabei im Bereich der Nut-Feder-Verbindung 19 ausgebildet und verläuft in etwa parallel zu der dem insassennahen Deckelende 6 zugeordneten Rechteckseite des Deckels 2. Das Abheben des Deckels 2 am insassenfernen Deckelende 7 unter Auflösen der Rastverbindung 20 ist mit einem Pfeil 34 in Fig. 12 eingezeichnet. Dadurch wird ein Airbagaustrittspalt 33 ausgebildet, der in Richtung zu der dem insassenfernen Deckelende 7 zugeordneten Rechteckseite des Deckel 2 mittels dem Segel 14 für einen Airbagaustritt gesperrt ist. Dadurch kann sich der Airbag 13 zu Beginn der Aktivierung der Sicherheitseinrichtung 1 nicht direkt in Richtung auf die der Instrumententafel 5 zugeordnete Beifahrersitzposition hin entfalten, sondern nur tangential durch die seitlichen Airbagaustrittspaltbereiche des Airbagaustrittspaltes 33.

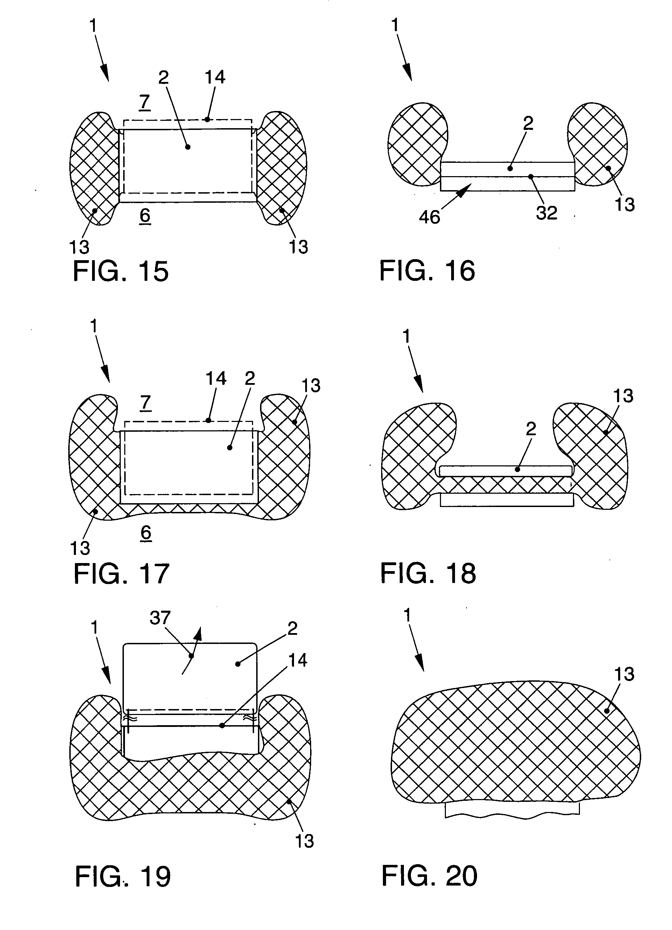

Diese erste Aufblasposition ist schematisch auch in den Fig. 15 in einer Draufsicht bzw. Fig. 16 in einer Frontansicht dargestellt. In Fig. 15 ist das unterhalb des Deckels 2 über dem Bereich des Airbagmoduls 29 aufgespannte Segel 14 strichliert eingezeichnet. Aufgrund der Sperrung des Airbagaustrittspaltes 33 in Richtung zu der dem insassenfernen Deckelende 7 zugeordneten Rechteckseite des Deckel 2 mittels dem Segel 14, kann sich der Airbag 13 zu Beginn seiner Entfaltung nur tangential durch die seitlichen Airbagaustrittspaltbereiche des Airbagaustrittspaltes 33 entfalten, was in Fig. 15 gut zu erkennen ist. Mit dieser gezielten Beeinflussung der Entfaltungskinematik des Airbags 13 können die insbesondere zu Beginn des Aufblasvorgangs auftretenden Belastungsspitzen erheblich reduziert werden, da hier dann der Energieeintrag zeitlich gestreckt wird. In Fig. 16, einer schematischen Vorderansicht aus der Sicht eines Beifahrers, ist der an den beiden seitlichen Rechteckseiten 8 und 9 hauptsächlich austretende Airbag 13 ebenfalls zu erkennen. Die im Deckel-Haltebereich 46 ausgebildete Nut-Feder-Verbindung 19 ist bei diesem Aufblaszustand aufgrund ihrer gegenüber der Rastverbindung 20 mit den einzelnen Rastnasen 20' größeren Haltekraft noch nicht gelöst, so dass im Bereich der Nut-Feder-Verbindung die Deckel-Schwenkachse 32 ausgebildet wird.

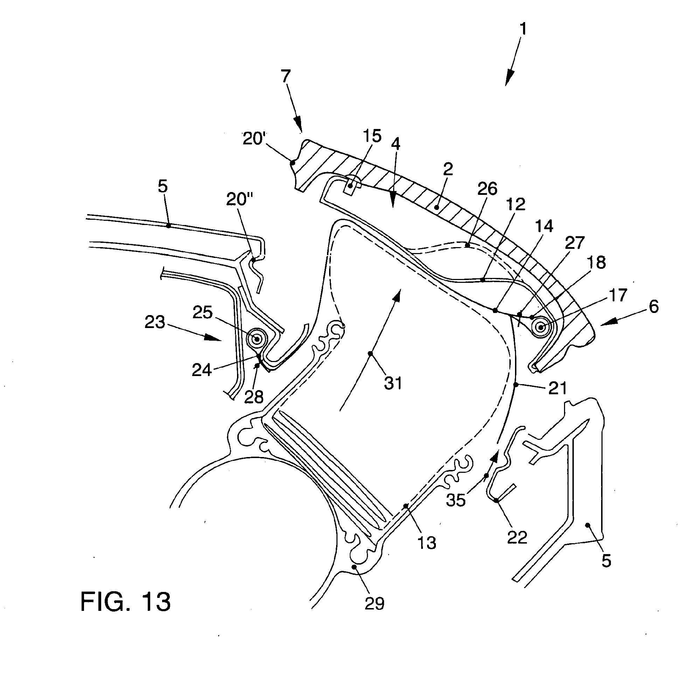

Im weiteren Verlauf des Aufblasens des Airbags 13 wird die mit dem Pfeil 31 eingezeichnete Aufdrückkraft des Airbags 13 immer größer, so dass die Haltekraft der Nut-Feder-Verbindung 19 im Deckel-Haltebereich 46 überschritten wird und der Deckel 2 somit auch im Deckel-Haltebereich 46 vollständig von der Airbagaustrittöffnung 3 abgehoben wird. Die Klebeverbindung zwischen dem Schutzlappen 21 und dem Halterahmen 22 ist dabei so ausgelegt, dass auch diese bei Erreichen einer dementsprechenden Airbagentfaltungskraft reißt und den Deckel 2 somit für ein vollständiges Abheben von der Airbagaustrittöffnung 3 freigibt. Dies ist mit dem Pfeil 35 in Fig. 13 eingezeichnet.

In Fig. 17 als Draufsicht und in Fig. 18 als Frontansicht ist diese zweite Aufblasposition schematisch dargestellt. Die Nut-Feder-Verbindung 19 im Deckel-Haltebereich 46 ist nun gelöst, so dass der Deckel 2 für ein vollständiges Abheben von der Airbagaustrittöffnung 3 freigegeben wird. Somit kann sich der Airbag 13 nunmehr auch in Richtung Beifahrer entfalten. Zu diesem Zeitpunkt sind die Belastungsspitzen, die zu Beginn des Aufblasvorgangs des Airbags entstehen, abgebaut und der Airbag kann sich mit verringerter Aggressivität in Richtung auf den Beifahrer hin zu dessen Schutz aufblasen.

Das in Fig. 11 dargestellte Scharnierband 30 ist aus Übersichtlichkeitsgründen in den Fig. 12, 13 und 14 weggelassen. Ein derartiges ggf. zusätzliches Scharnierband 30 ist vorzugsweise so ausgelegt, dass zu Beginn der Entfaltung des Airbags 13 und einem Verschwenken des Deckels 2 um die Deckel-Schwenkachse 32 das Scharnierband 30 dieses Verschwenken bis zu einem bestimmten Öffnungswinkel definiert und anschließend bei Erreichen einer größeren Entfaltungskraft des Airbags 13 die Verbindung zwischen dem Scharnierband 30 und dem Deckel 2 bzw. dem Halterahmen 22 gelöst wird zum vollständigen Abheben des Deckels 2 von der Airbagaustrittöffnung 3.

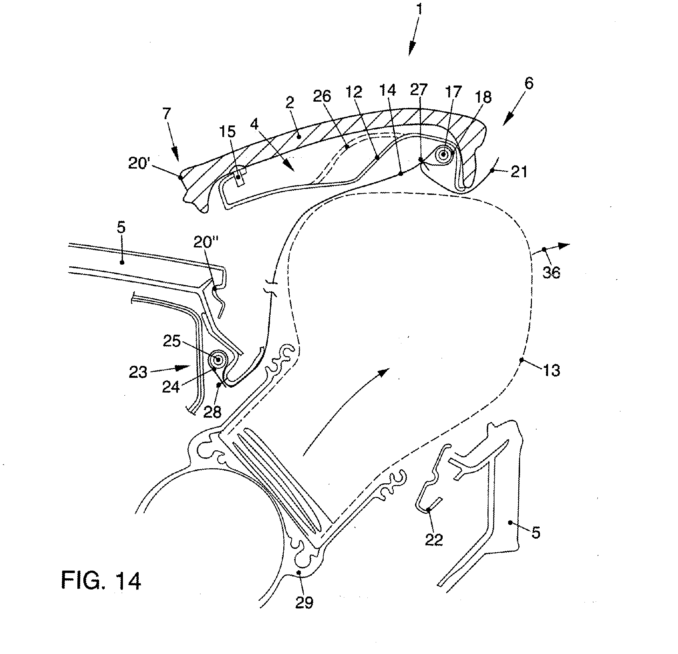

Durch das vollständige Abheben des Deckels 2 von der Airbagaustrittöffnung 3 kann sich der Airbag 13, wie dies in Fig. 14 dargestellt ist, nun ungehindert in Richtung Beifahrersitzposition zum Schutz des Beifahrers vollständig aufblasen. Dies ist mit dem Pfeil 36 in Fig. 14 eingezeichnet. Der Deckel 2 wird dabei durch das nunmehr als Fangband wirkende Segel 14 gegen ein unkontrolliertes Umherfliegen, insbesondere in Richtung Fahrzeuginsassen, gesichert.

Diese dritte Aufblasposition ist in Fig. 19 in einer Draufsicht und in Fig. 20 in einer Frontansicht schematisch dargestellt. Das vollständige Abheben des Deckels 2 ist mit einem Pfeil 37 in Fig. 19 eingezeichnet, wobei das Segel 14 mit der Funktion eines Fangbandes diesen an einem unkontrollierten Umherfliegen hindert.

In den Fig. 15 bis 20 ist die den Deckel 2 bzw. die die Airbagaustrittöffnung 3 umgebende Instrumententafel 5 aus Übersichtlichkeitsgründen weggelassen.

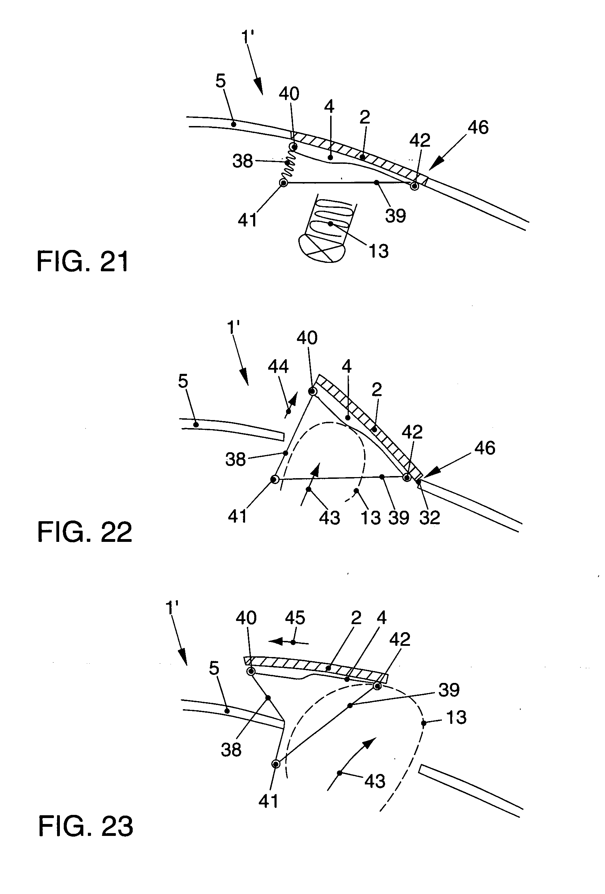

In den Fig.21 bis 23 ist schematisch eine alternative Ausführungsform einer Sicherheitseinrichtung 1' mit Schnittdarstellungen gezeigt. Bauteile mit gleicher Ausführung und Funktion wie bei der Sicherheitseinrichtung 1 sind mit gleichen Bezugszeichen versehen.

In Fig. 21 ist schematisch ein nicht aktivierter Grundzustand der Sicherheitseinrichtung 1' gezeigt, bei der ein erstes Fangband 38 in einem ersten Anbindungspunkt 40 am insassenfernen Deckelende 7 und andererseits in einem zweiten Anbindungspunkt 41, der bezogen auf die Airbagaustrittöffnungsebene in etwa in gerader Verlängerung unterhalb des ersten Anbindungspunkts 40 im insassenfernen Deckelbereich 7 liegt, angebunden ist. Das zweite Fangband 39 ist einerseits am zweiten Anbindungspunkt 41 des ersten Fangbandes 38 und andererseits in einem dritten Anbindungspunkt 42 am insassennahen Deckelende 6 angebunden, so dass die ersten und zweiten Fangbänder 38 und 39 im nicht aktivierten Grundzustand ungespannt im Bereich hinter der Instrumententafel 5 angeordnet sind. Das Fangband 38 ist als durchgehendes Segel ausgebildet und erstreckt sich somit in etwa über die gesamte Deckellänge von einer seitlichen Rechteckseite 8 und zur anderen seitlichen Rechteckseite 9, d. h. in Bezug auf die Zeichenebene senkrecht. Das Fangband 39 ist beidseitig am Deckel 2 angeordnet und jeweils einer der beiden seitlichen Rechteckseiten 8 bzw. 9 zugeordnet.
Bei einer Aktivierung der Sicherheitseinrichtung 1' hebt der sich entfaltende Airbag 13 das insassenferne Deckelende 7 so lange ab, bis das erste Fangband 38 gestrafft ist. Dies ist in Fig. 22 schematisch dargestellt. Die Haltekraft am Deckel-Haltebereich ist dabei so ausgelegt, dass die Nut-Feder-Verbindung 19 zunächst nicht gelöst wird. Der Deckel 2 schwenkt somit um die im Deckel-Haltebereich ausgebildete Deckel-Schwenkachse zur Ausbildung des Airbagaustrittspaltes 33 auf. Aufgrund des durch das Fangband 38 gebildeten Segels ist eine Entfaltung des Airbags 13 in Richtung der dem insassenfernen Deckelende 7 zugeordneten Rechteckseite des Deckels 2 gesperrt, so dass sich der Airbag 13 zu Anfang seiner Entfaltung weitgehend nur tangential durch die seitlichen Airbagspaltbereiche des Airbagspaltes 33 entfaltet. Das Aufblasen des Airbags 13 ist mit einem Pfeil 43 und das Abheben des Deckels 2 am insassenfernen Deckelende 7 ist mit einem Pfeil 44 in Fig. 22 eingezeichnet.

Anschließend wird dann durch die durch das Aufblasen des Airbags 13 bedingte Erhöhung der Aufdrückkraft die Nut-Feder-Verbindung 19 zwischen dem insassennahen Deckelende 6 und der daran angrenzenden Instrumententafel 5 am Deckel-Haltebereich 46 gelöst zur Freigabe der gesamten Airbagaustrittöffnung 3. Der Deckel 2 wird dabei so lange abgehoben, bis auch das zweite Fangband 39 gestrafft ist. Anschließend wird der Deckel 2 mittels der gestrafften seitlichen Fangbänder 38 und 39 gezielt geführt vom Fahrzeuginsassen weg geklappt.

In Fig. 23 ist der Deckel 2 komplett von der Airbagaustrittöffnung 3 abgehoben, was durch die weitere Entfaltung des Airbags 13 bedingt wird. Mit dem Pfeil 43 ist in Fig. 23 wieder die Entfaltung des Airbags gekennzeichnet und die damit verbundene Verlagerung des Deckels 2 vom Insassen weg ist mit einem Pfeil 45 in Fig. 23 eingezeichnet.

### BEZUGSZEICHENLISTE

- 1/1': Sicherheitseinrichtung
- 2: Deckel
- 3: Airbagaustrittöffnung
- 4: Verstärkungsblech
- 5: Instrumententafel
- 6: insassennahes Deckelende
- 7: insassenfernes Deckelende
- 8: seitliche Rechteckseite
- 9: seitliche Rechteckseite
- 10: Blechlage
- 11: Blechlage
- 12: Rampe
- 13: Airbag
- 14: Segel
- 15: Nietverbindung
- 16: Anbindungspunkt
- 17: Befestigungsstange
- 18: Schlaufe
- 19/19': Nut-Feder-Verbindung
- 20: Rastverbindung
- 20': Rastnase
- 20": Rastnut
- 21: Schutzlappen
- 22: Halterahmen
- 23: Anbindungspunkt
- 24: Schlaufe
- 25: Befestigungsstange
- 26: Versteifungssicke
- 27: Naht
- 28: Naht
- 29: Airbagmodul
- 30: Scharnierband
- 31: Pfeil
- 32: Deckel-Schwenkachse
- 33: Airbagaustrittspalt
- 34: Pfeil
- 35: Pfeil
- 36: Pfeil
- 37: Pfeil
- 38: Fangband
- 39: Fangband
- 40: erster Anbindungspunkt
- 41: zweiter Anbindungspunkt
- 42: dritter Anbindungspunkt
- 43: Pfeil
- 44: Pfeil
- 45: Pfeil
- 46: Deckel-Haltebereich

## Patentansprüche

1. Sicherheitseinrichtung für ein Fahrzeug, insbesondere für ein Kraftfahrzeug,
mit einer in einem Verkleidungsteil ausgebildeten Airbagaustrittöffnung, die im nicht aktivierten Grundzustand der Sicherheitseinrichtung mittels einem Deckel verschlossen ist, und
mit einem im nicht aktivierten Grundzustand im Bereich der Airbagaustrittöffnung auf der dem Fahrzeuginnenraum abgewandten Seite des Verkleidungsteiles zusammengefaltet angeordneten Airbag, wobei der Deckel im aktivierten Zustand der Sicherheitseinrichtung durch den sich aufblasenden Airbag zur Freigabe der Airbagaustrittöffnung von dieser abhebbar ist,
**dadurch gekennzeichnet,**
**dass** der Deckel (2) so am Öffnungsrandbereich der Airbagaustrittöffnung (3) angebunden ist, dass dieser durch den sich aufblasenden Airbag (13) zuerst mit einem einer Fahrzeuginsassensitzposition abgewandten insassenfernen Deckelende (7) von der Airbagsaustrittöffnung (3) abhebbar ist und mit einem der Fahrzeuginsassensitzposition zugewandten insassennahen Deckelendbereich (6), der dem insassenfernen Deckelende (7) gegenüberliegt, weiterhin in einem Deckel-Haltebereich (46) der Airbagaustrittöffnung (3) mittels einer Halteverbindung (19) gehalten ist dergestalt, dass zwischen dem Verkleidungsteil (5) und dem abgehobenen Deckelbereich (7) ein seitlicher und dem Deckel-Haltebereich gegenüberliegender hinterer Airbagaustrittspalt (33) ausgebildet ist, durch den hindurch ein Airbagteilbereich nicht direkt in Richtung auf die zugeordnete Fahrzeuginsassensitzposition in den Fahrzeuginnenraum hinein entfaltbar ist, und
**dass** im weiteren Verlauf des Aufblasens des Airbags (13) die Halteverbindung (19) zwischen dem insassennahen Deckelendbereich (6) und dem Deckel-Haltebereich der Airbagaustrittöffnung (3) lösbar ist zum vollständigen Abheben des Deckels (2) von der Airbagaustrittöffnung (3) und damit zur vollständigen Freigabe der Airbagaustrittöffnung (3) für ein Aufblasen des Airbags (13) in Richtung zur zugeordneten Fahrzeuginsassensitzposition hin.

2. Sicherheitseinrichtung nach Anspruch 1, **dadurch gekennzeichnet, dass** der Deckel zu Beginn des Abhebevorgangs um eine im Deckel-Haltebereich (46) liegende Deckel-Schwenkachse (32) aufschwenkbar ist.

3. Sicherheitseinrichtung nach Anspruch 1 oder Anspruch 2, **dadurch gekennzeichnet,**
**dass** der Deckel (2) eine im wesentliche rechteckige Form aufweist,
**dass** eine erste, insassenferne Rechteckseite (7) sowie die beiden seitlichen Rechteckseiten (8, 9) wenigstens bereichsweise mittels einer ersten Verbindungseinrichtung (20) mit einer vorgebbaren ersten Haltekraft am zugeordneten Airbagaustrittöffnungsrandbereich gehalten ist,
**dass** eine zweite, insassennahe Rechteckseite (6), die der ersten, insassenfernen Rechteckseite (7) in etwa gegenüberliegt, den insassennahen Deckelendbereich (6) ausbildet und mittels einer zweiten Verbindungseinrichtung (19) mit einer vorgebbaren zweiten Haltekraft am Deckel-Haltebereich (46) gehalten ist,
**dass** die zweite Haltekraft größer als die erste Haltekraft ist dergestalt, dass bei einer durch das Aufblasen des Airbags (13) bedingten Krafteinwirkung auf die Deckelunterseite, die größer als die erste Haltekraft und kleiner als die zweite Haltekraft ist, der Deckel (2) mit der ersten Rechteckseite (7) und wenigstens zum Teil mit den seitlichen Rechteckseiten (8, 9) vom Airbagaustrittöffnungsrandbereich unter Ausbildung des Airbagaustrittspaltes (33) abhebt, vorzugsweise um eine im Deckel-Haltebereich (46) liegende Deckel-Schwenkachse (32) aufschwenkbar ist, während der Deckel (2) mit der zweiten Rechteckseite (6) im Deckel-Haltebereich (46) gehalten ist, und
**dass** bei sich daran anschließender Krafterhöhung durch weiteres Aufblasen des Airbags (13) und Überschreiten der zweiten Haltekraft der Deckel (2) auch im Deckel-Haltebereich (46) von dem Airbagaustrittöffnungsrandbereich abhebt.

4. Sicherheitseinrichtung nach Anspruch 3, **dadurch gekennzeichnet,**
**dass** die zweite Verbindungseinrichtung durch eine durchgehende Nut-Feder-Verbindung (19) im Deckel-Haltebereich (46) an dem zugeordneten Airbagaustrittöffnungsrandbereich ausgebildet ist, und/oder
**dass** der insassennahe Deckelrandbereich im Deckel-Haltebereich (46) mittels wenigstens einem Scharnierband (30) im Deckel-Haltebereich (46) vorzugsweise an einem unter dem Verkleidungsteil (5) angeordneten Halterahmen (22) so festlegbar ist, dass dieses Scharnierband (30) insbesondere bei Erreichen bestimmter Öffnungswinkel definiert aus einer Verbindung, insbesondere einem Formschluss ausklinkt.

5. Sicherheitseinrichtung nach Anspruch 4, **dadurch gekennzeichnet, dass** die erste Verbindungseinrichtung an der ersten Rechteckseite (7) durch einzelne, voneinander beabstandete Rastverbindungen (20) ausgebildet ist.

6. Sicherheitseinrichtung nach Anspruch 5, **dadurch gekennzeichnet, dass** die erste Verbindungseinrichtung an den seitlichen Rechteckseiten (8, 9) jeweils durch eine durchgehende Nut-Feder-Verbindung (19) und/oder durch einzelne, voneinander beabstandete Rastverbindungen gebildet ist.

7. Sicherheitseinrichtung nach Anspruch 5 oder Anspruch 6, **dadurch gekennzeichnet, dass** die einzelnen, voneinander beabstandeten Rastverbindungen (20) durch einzelne entsprechenden Rastausnehmungen (20") zugeordnete Rastnasen (20') gebildet sind.

8. Sicherheitseinrichtung nach einem der Ansprüche 1 bis 7, **dadurch gekennzeichnet, dass** die Deckelunterseite so ausgebildet ist, dass der Airbag (13) zu Beginn des Aufblasvorgangs im Wesentlichen eine Aufdrückkraft auf den insassenfernen Deckelendbereich (7) ausübt.

9. Sicherheitseinrichtung nach Anspruch 8, **dadurch gekennzeichnet, dass** an der Deckelunterseite ein diese flächig abdeckendes Verstärkungsblech (4) angebracht ist, das mit einem dem insassenfernen Deckelbereich (7) zugeordneten insassenfernen Blechbereich weiter in Richtung zu dem Airbag (13) hin absteht als ein sich daran in etwa in einem bezogen auf die Erstreckungsrichtung zwischen dem insassennahen und insassenfernen Deckelende mittleren Bereich als Übergangsbereich anschließender und dem insassennahen Deckelbereich (6) zugeordneter Blechbereich dergestalt, dass der sich aufblasende Airbag zu Beginn des Aufblasvorgangs im Wesentlichen zuerst auf den insassenfernen Blechbereich auftrifft und vorzugsweise ein Öffnungsmoment um eine im Deckel-Haltebereich liegende Deckel-Schwenkachse (32) bewirkt.

10. Sicherheitseinrichtung nach Anspruch 9, **dadurch gekennzeichnet, dass** das Verstärkungsblech (4) wenigstens im insassenfernen Blechbereich doppelwandig als Hohlprofil ausgebildet ist.

11. Sicherheitseinrichtung nach einem der Ansprüche 9 bis 10, **dadurch gekennzeichnet, dass** das Verstärkungsblech (4) wenigstens im insassennahen Blechbereich, vorzugsweise im gesamten Blechbereich, Versteifungssicken (26) aufweist.

12. Sicherheitseinrichtung nach einem der Ansprüche 9 bis 11, **dadurch gekennzeichnet, dass** das Verstärkungsblech (4) durch Toxen und/oder Nieten (15) an der Deckelunterseite befestigt ist.

13. Sicherheitseinrichtung nach einem der Ansprüche 9 bis 12, **dadurch gekennzeichnet, dass** der Übergangsbereich zwischen dem insassennahen und insassenfernen Blechbereich in Richtung zur Deckelunterseite hin konvex gewölbt ausgebildet ist zur Ausbildung einer richtungsgebenden Rampe (12) für den Airbag (13).

14. Sicherheitseinrichtung nach einem der Ansprüche 1 bis 13, **dadurch gekennzeichnet, dass** der Deckel mit wenigstens einem Fangband (14; 38, 39) gesichert ist, das einerseits am Deckel (2) in einem deckelseitigen Anbindungspunkt (16; 42) und andererseits im Bereich der Airbagaustrittöffnung (3) auf der dem Fahrzeuginnenraum abgewandten Seite des Verkleidungsteiles (5) in einem weiteren Anbindungspunkt (23; 41) angebunden ist.

15. Sicherheitseinrichtung nach einem der Ansprüche 1 bis 14, **dadurch gekennzeichnet, dass** wenigstens ein Sperrmittel vorgesehen ist, das zu Beginn des Aufblasvorgangs bei Ausbildung des Airbagaustrittspaltes (33) den hinteren Airbagaustrittspaltbereich (33), der dem Deckel-Haltebereich (46) gegenüberliegt, sperrt, so dass sich der Airbag nur durch die beiden seitlichen Airbagaustrittspaltbereiche in etwa tangential zu den seitlichen Deckelrandbereichen (8, 9) in den Fahrzeuginnenraum hinein entfaltet, und dass im weiteren Verlauf des Airbagaufblasvorgangs durch Erhöhen der Aufdrückkraft der Deckel (2) insgesamt von der Airbagaustrittöffnung (3) abhebbar ist.

16. Sicherheitseinrichtung nach Anspruch 14 und 15, **dadurch gekennzeichnet, dass** das wenigstens eine Fangband (14) einerseits im Bereich des Airbagaustrittöffnungsrandes unterhalb des insassenfernen Deckelendes (7) angebunden ist und andererseits am insassennahen Deckelendbereich (6) angebunden ist dergestalt, dass das wenigstens eine Fangband im nicht aktivierten Grundzustand der Sicherheitseinrichtung (1) den zusammengefalteten Airbag (13) überspannt und von oben her wenigstens bereichsweise abdeckt,
dass das wenigstens eine Fangband (14) vorzugsweise so dimensioniert ist, dass der sich aufblasende Airbag (13) das wenigstens eine Fangband (14) wenigstens bereichsweise in eine Anlageverbindung an der Deckelunterseite überführt zur gezielten Aufbringung der durch das Aufblasen des Airbags (13) auf den Deckel (2) einwirkenden Aufdrückkraft dergestalt, dass bei einer bestimmten vorgebbaren anfänglichen Aufdrückkraft der Deckel (2) mit dem insassenfernen Deckelende (7) unter Ausbildung des Airbagaustrittspaltes (33) von der Airbagaustrittöffnung (3) abhebbar ist, wobei das wenigstens eine Fangband (14) den hinteren Airbagaustrittspaltbereich (33), der dem Deckel-Haltebereich (46) gegenüberliegt, sperrt, so dass sich der Airbag (13) nur durch die beiden seitlichen Airbagaustrittspaltbereiche in etwa tangential zu den seitlichen Deckelrandbereichen (8, 9) in den Fahrzeuginnenraum hinein entfaltet, und
dass im weiteren Verlauf des Airbagaufblasvorgangs durch Erhöhen der Aufdrückkraft der Deckel (2) insgesamt von der Airbagaustrittöffnung (3) abhebbar ist, wobei das wenigstens eine Fangband den Deckel gegen unkontrolliertes Wegschleudern sichert.

17. Sicherheitseinrichtung nach Anspruch 16, **dadurch gekennzeichnet, dass** das wenigstens eine Fangband durch ein einziges Segel (14) ausgebildet ist, das sich in etwa über die gesamte Deckelbreite zwischen den seitlichen Deckelrandbereichen (8, 9) erstreckt.

18. Sicherheitseinrichtung nach Anspruch 17, **dadurch gekennzeichnet, dass** das Segel (14) im Bereich des deckelseitigen Anbindungspunktes (16) einen Schutzlappen (21) aufweist, der sich beim durch die Aufdrückkraft des Airbags (13) bedingten Abheben des Deckels (2) vom Deckel-Haltebereich (46) zwischen den sich aufblasenden Airbag (13) und den Kantenbereich des insassennahen Deckelendes (6) legt zur Verhinderung einer Beschädigung des Airbags (13).

19. Sicherheitseinrichtung nach Anspruch 18, **dadurch gekennzeichnet, dass** der Schutzlappen (21) im nicht aktivierten Grundzustand der Sicherheitseinrichtung (1) mit einem freien Ende im Bereich des Airbagaustrittöffnungsrandbereiches unterhalb des insassennahen Deckelendbereichs (6) und unterhalb des deckelseitigen Anbindungspunktes (16) festgelegt, vorzugsweise angeklebt ist für ein definiertes Überführen des Schutzlappens (21) als Kantenschutz in die das insassennahe Deckelende (6) abdeckende Schutzposition beim durch die Aufdrückkraft des Airbags (13) bedingten Abheben des Deckels (2) vom Deckel-Haltebereich (46).

20. Sicherheitseinrichtung nach einem der Ansprüche 16 bis 19, **dadurch gekennzeichnet, dass** ferner wenigstens ein zweites Fangband vorgesehen ist, das einerseits ebenfalls im Bereich des Airbagaustrittöffnungsrandes unterhalb des insassenfernen Deckelendes angebunden ist und das andererseits am insassenfernen Deckelendbereich angebunden ist dergestalt,
dass bei im Verlauf des Aufblasvorgangs gestrafften Fangbändern und vollständig abgehobenem Deckel dieser gezielt und geführt nach hinten in Richtung vom Fahrzeuginsassen weg klappbar ist.

21. Sicherheitseinrichtung nach Anspruch 20, **dadurch gekennzeichnet, dass** der insassenferne Deckelendbereich solange unter gleichzeitiger Beibehaltung der Deckel-Halteverbindung zwischen dem insassennahen Deckelendbereich und dem Deckel-Haltebereich (46) vom zugeordneten Airbagaustrittöffnungsrandbereich abhebbar ist, bis das wenigstens eine zweite Fangband gestrafft ist oder die Aufdrückkraft größer ist als die Haltekraft der Deckel-Halteverbindung .

22. Sicherheitseinrichtung nach einem der Ansprüche 17 bis 21, **dadurch gekennzeichnet, dass** die Anbindungspunkte (16, 23) jeweils durch eine Befestigungsstange (17, 25), die vorzugsweise einen Rohrquerschnitt aufweist, gebildet sind, an der das Segel (14) jeweils mittels Schlaufen (18, 24), vorzugsweise mittels voneinander beabstandeter Schlaufen (18, 24), festgelegt ist.

23. Sicherheitseinrichtung nach Anspruch 22, **dadurch gekennzeichnet,**
**dass** ein erstes Segelende zur Ausbildung wenigstens einer Schlaufe (24) für die Festlegung am zweiten Anbindungspunkt (23) umgenäht ist,
**dass** zur Ausbildung wenigstens einer Schlaufe (18) für die Festlegung am ersten deckelseitigen Anbindungspunkt (16) ein dem ersten Segelende gegenüberliegendes zweites Segelende so umgenäht ist, dass ein davon wegragender Schutzlappen (21) ausgebildet ist.

24. Sicherheitseinrichtung nach einem der Ansprüche 17 bis 23, **dadurch gekennzeichnet, dass** das Segel (14) durch ein Gewebematerial gebildet ist, bei dem die Kett- und Schussfäden zur Vermeidung eines Auskämmens vorzugsweise in einem Winkel von 30 bis 60°, höchst bevorzugt in einem Winkel von 45° miteinander verwoben sind.

25. Sicherheitseinrichtung nach Anspruch 14, **dadurch gekennzeichnet,**
**dass** an den sich im Bereich zwischen dem insassennahen und insassenfernen Deckelenden erstreckenden, gegenüberliegenden seitlichen Deckelrandbereichen jeweils zwei Fangbänder (38, 39) vorgesehen sind dergestalt,
**dass** ein erstes Fangband (38) einerseits in einem ersten Anbindungspunkt (40) am insassenfernen Deckelbereich (7) und andererseits in einem zweiten Anbindungspunkt (41), der bezogen auf die Airbagaustrittöffnungsebene in etwa in gerader Verlängerung unterhalb des ersten Anbindungspunktes (40) im insassenfernen Deckelbereich (7) liegt, angebunden ist, und
**dass** ein zweites Fangband (39) einerseits am oder benachbart zum zweiten Anbindungspunkt (41) des ersten Fangbandes (38) und andererseits in einem dritten Anbindungspunkt (42) am insassennahen Deckelbereich (6) angebunden ist dergestalt,
**dass** die ersten und zweiten Fangbänder (38, 39) im nicht aktivierten Grundzustand ungespannt im Bereich hinter dem Verkleidungsteil (5) angeordnet sind,
**dass** der Airbag (13) zu Beginn des Aufblasvorgangs das insassenferne Deckelende (7) solange abhebt, bis das erste Fangband (38) gestrafft ist,
**dass** anschließend durch die durch das Aufblasen des Airbags (13) bedingte Erhöhung der Aufdrückkraft die Deckel-Halteverbindung (19) des Deckels (2) im Deckel-Haltebereich (46) lösbar ist zur Freigabe der gesamten Airbagaustrittöffnung (3), wobei der Deckel (2) solange abhebbar ist, bis auch das zweite Fangband (39) gestrafft ist, und
**dass** anschließend der Deckel (2) mittels der gestrafften seitlichen Fangbänder (38, 39) geführt nach hinten in Richtung vom Fahrzeuginsassen weg klappbar ist.

26. Sicherheitseinrichtung nach Anspruch 25, **dadurch gekennzeichnet, dass** wenigstens das wenigstens eine erste Fangband (38) so ausgebildet ist, dass dieses den hinteren Airbagaustrittspaltbereich, der dem Deckel-Haltebereich (46) gegenüberliegt, sperrt, so dass sich der Airbag zu Beginn des Aufblasvorgangs nur durch die beiden seitlichen Airbagaustrittspaltbereiche in etwa tangential zu den seitlichen Deckelrandbereichen in den Fahrzeuginnenraum hinein entfaltet.

27. Sicherheitseinrichtung nach Anspruch 26, **dadurch gekennzeichnet, dass** wenigstens das erste Fangband durch ein Segel ausgebildet ist, das sich in etwa über die gesamte Deckelbreite zwischen den seitlichen Deckelrandbreichen erstreckt.

28. Sicherheitseinrichtung nach einem der Ansprüche 14 bis 27, **dadurch gekennzeichnet, dass** die nicht am Deckel (2) liegenden Anbindungspunkte (23) durch wenigstens eine Befestigungsstange (25) gebildet sind, die an einem unterhalb des Verkleidungsteiles angeordneten Halterahmen (22) befestigt ist,
dass der Halterahmen (22) im Wesentlichen um die Airbagaustrittöffnung (3) herum angeordnet ist, und
dass an dem Halterahmen (22) ferner ein Airbagmodul (29), das den Airbag (13) und einen Gasgenerator umfasst, sowie ein vom Segel (14) wegragender Schutzlappen (21) festlegbar sind.

29. Sicherheitseinrichtung nach einem der Ansprüche 1 bis 28, **dadurch gekennzeichnet, dass** der Deckel (2) eine Airbagklappe im beifahrerseitigen Bereich einer Instrumententafel (5) ist.
